# EUROPEAN PATENT APPLICATION

(11) **EP 2 255 967 A1**
(43) Date of publication of application: **01.12.2010**
(21) Application number: 10163888.0
(22) Date of filing: 26.05.2010
(51) Int. Cl.: B41J 2/16, C08G 77/38, C09J 5/00

(54) **Bonding method and bonded structure**

(30) Priority: 28.05.2009 JP 2009129183
(71) Applicant: Seiko Epson Corporation, Shinjuku-ku, Tokyo (JP)
(72) Inventor: Sato, Mitsuru, Nagano 392-8502 (JP); Yamamoto, Takatoshi, Nagano 392-8502 (JP)
(74) Representative: HOFFMANN EITLE

(57) **Abstract**

A bonding method includes: forming a liquid coating of an epoxy-modified silicone material-containing liquid material onto a first base material and/or a second base material;
drying and/or curing the liquid coating to obtain a bonding film on the first base material and/or the second base material;
imparting energy to the bonding film to obtain an activated bonding film; and
contacting the first base material and the second base material via the activated bonding film, so as to obtain a bonded structure in which the first base material and the second base material are bonded to each other via the bonding film.

## Description

### BACKGROUND

### 1. Technical Field

The present invention relates to bonding methods and bonded structures.

### 2. Related Art

Use of adhesives such as an epoxy-based adhesive, a urethane-based adhesive, and a silicone-based adhesive has been common as a method of bonding (adhesive bonding) between two members (base materials).

Because such adhesives exhibit superior adhesion regardless of the material of the bonded members, members made from various materials can be bonded to each other in a wide range of combinations.

For example, a droplet discharge head (inkjet-type printing head) provided in inkjet printers can be assembled by the adhesive bonding of components made from different materials, including resin materials, metal materials, and silicon-based materials.

For the adhesive bonding of such members, a liquid-or paste-adhesive is applied onto a bonding face of one member, and the members are bonded to each other via the adhesive. The members adhere together upon curing (solidifying) the adhesive by means of heat or light.

However, such adhesive bonding is problematic in the following respects.
- Adhesion strength is poor
- Low dimensional accuracy
- Long adhesion time attributed to a long curing time

Further, because primers are often used to improve adhesion strength, the cost and labor for this procedure raises the adhesion cost and complicates the adhesion step.

A solid bonding method is available as a method of bonding without an adhesive.

In solid bonding, members are directly bonded to each other without interposing an intermediate layer such as an adhesive (see, for example, JP-A-5-82404).

Because solid bonding does not use an intermediate layer such as an adhesive, a bonded structure with high dimensional accuracy can be obtained.

However, solid bonding has the following problems.
- Materials of the bonded members are restricted
- Bonding process involves a high-temperature heat treatment (for example, at about 700°C to 800°C)
- Bonding process needs to be performed under an atmosphere of reduced pressure

In view of these problems, there is a need for a method of efficiently and strongly bonding members with high dimensional accuracy at low temperatures regardless of the materials used for the bonded members.

### SUMMARY

An advantage of some aspects of the invention is to provide a bonding method that can efficiently and strongly bond two base materials with high dimensional accuracy at low temperatures. A bonded structure bonded by such bonding methods is also provided.

The foregoing advantage can be realized by the following aspects of the invention.

A bonding method according to a first aspect of the invention includes:
forming a liquid coating of an epoxy-modified silicone material-containing liquid material onto a first base material and/or a second base material;
drying and/or curing the liquid coating to obtain a bonding film on the first base material and/or the second base material;
imparting energy to the bonding film to obtain an activated bonding film; and
contacting the first base material and the second base material via the activated bonding film, so as to obtain a bonded structure in which the first base material and the second base material are bonded to each other via the bonding film.

In this way, two base materials can be efficiently and strongly bonded to each other with high dimensional accuracy at low temperatures.

In the bonding method according to the first aspect of the invention, it is preferable that the epoxy-modified silicone material be obtained by an addition reaction between a silicone material and an epoxy resin.

In the bonding method according to the first aspect of the invention, it is preferable that the silicone material comprises a main backbone of polydimethylsiloxane, and that the main backbone is branched.

In this way, the branch chains of the silicone material tangle together to form the bonding film, and thus the resulting bonding film has particularly high film strength.

In the bonding method according to the first aspect of the invention, it is preferable that the silicone material is one in which at least one of the methyl groups of the polydimethylsiloxane is substituted with a phenyl group.

In this way, the film strength of the bonding film can be further improved.

In the bonding method according to the first aspect of the invention, it is preferable that the silicone material comprises a plurality of silanol groups.

In this way, the hydroxyl group of the silicone material and the epoxy group of the epoxy resin can reliably bind to each other, and the epoxy-modified silicone material can be reliably synthesized by the addition reaction between the silicone material and the epoxy resin.

Further, because the hydroxyl groups contained in the residual silanol groups in the epoxy-modified silicone material bind together when the liquid coating is dried and/or cured to obtain the bonding film, the resulting bonding film excels in film strength.

In the bonding method according to the first aspect of the invention, it is preferable that the epoxy resin comprises a phenylene group in its molecule.

The bonding film formed by using the epoxy-modified silicone material that contains such an epoxy resin exhibits a particularly high film strength attributed to the phenylene group contained in the epoxy resin.

In the bonding method according to the first aspect of the invention, it is preferable that the epoxy resin has a straight-chain molecular structure.

In this way, the epoxy resin joined to the silicone material exists in a state of being exposed on the silicone material. Thus, with the straight-chain molecular structure, the epoxy resin molecules in the epoxy-modified silicone material have more chance to contact with each in obtaining the bonding film from the liquid coating. As a result, the epoxy resin molecules tangle together in the epoxy-modified silicone material, and the epoxy groups of the epoxy resin are chemically bound to each other by ring-opening polymerization. In this way, the film strength of the resulting bonding film can be reliably improved.

In the bonding method according to the first aspect of the invention, it is preferable that the energy be imparted to the bonding film by contacting the bonding film with a plasma.

In this way, the bonding film can be activated in an extremely short time period (for example, on the order of several seconds), making it possible to produce the bonded structure in a short time.

In the bonding method according to the first aspect of the invention, it is preferable that the plasma contact be performed under atmospheric pressure.

When the plasma contact is performed under atmospheric pressure, or specifically in an atmospheric pressure plasma treatment, the surroundings of the bonding film is not reduced pressure. Thus, for example, the methyl groups of the polydimethylsiloxane backbone in the bonding film-forming epoxy-modified silicone material will not be cut unnecessarily when these methyl groups are subjected to cutting and removal by the action of plasma to develop adhesion near the surface of the bonding film.

In the bonding method according to the first aspect of the invention, it is preferable that the plasma contact be performed by supplying a plasma gas to the bonding film, wherein the plasma gas is produced by introducing a gas between opposing electrodes under applied voltage between the electrodes.

In this way, the plasma can contact the bonding film both easily and reliably, and adhesion can be reliably developed near the surface of the bonding film.

In the bonding method according to the first aspect of the invention, it is preferable that the electrodes be separated from each other by a distance of 0.5 to 10 mm.

In this way, electric field can be generated between the electrodes more reliably, and adhesion can be reliably developed near the surface of the bonding film.

In the bonding method according to the first aspect of the invention, it is preferable that the voltage applied between the electrodes be 1.0 to 3.0 kVp-p.

In this way, electric field can be generated between the electrodes more reliably, and adhesion can be reliably developed near the surface of the bonding film.

In the bonding method according to the first aspect of the invention, it is preferable that the plasma be produced from a gas whose primary component is a helium gas.

This makes it easier to control the extent of activation of the bonding film.

In the bonding method according to the first aspect of the invention, it is preferable that the plasma be produced from a gas whose primary component is a helium gas, and that the gas be supplied between the electrodes at a rate of 1 to 20 SLM.

In this way, the effect of plasma activation of the bonding film can be exhibited more prominently.

In the bonding method according to the first aspect of the invention, it is preferable that the helium gas content of the gas be 85 vol% or more.

In this way, by contacting the plasma with the bonding film at such a rate, the bonding film can be sufficiently and reliably activated despite the short contact time.

A bonded structure according to a second aspect of the invention is produced by bonding the first base material and the second base material to each other via the bonding film using a bonding method as defined above.

In this way, a highly reliable bonded structure can be obtained.

### BRIEF DESCRIPTION OF THE DRAWINGS

The invention will be described with reference to the accompanying drawings, wherein like numbers reference like elements.

Figs. 1A to 1D are diagrams (longitudinal sections) illustrating a First Embodiment of a bonding method of the invention.

Figs. 2E to 2G are diagrams (longitudinal sections) illustrating a First Embodiment of a bonding method of the invention.

Fig. 3 is a schematic diagram illustrating a structure of an atmospheric pressure plasma apparatus.

Figs. 4A to 4C are diagrams (longitudinal sections) illustrating a Second Embodiment of a bonding method of the invention.

Fig. 5 is an exploded perspective view illustrating an inkjet-type printing head (droplet discharge head) obtained by using a bonded structure according to an embodiment of the invention.

Fig. 6 is a cross sectional view illustrating a structure of a relevant portion of the inkjet-type printing head illustrated in Fig. 5.

Fig. 7 is a schematic diagram illustrating an embodiment of an inkjet printer including the inkjet-type printing head illustrated in Fig. 5.

### DESCRIPTION OF EXEMPLARY EMBODIMENTS

Bonding methods and bonded structures of the invention are described below in detail based on preferred embodiments represented by the attached drawings. Where the term "about" is used in the context of a numerical value or range, this is intended to mean +/- 10% of the indicated value(s).

### Bonding Method

A bonding method of the invention includes:
1. preparing a first base material 21 and a second base material 22 to be bonded to each other via a bonding film;
2. forming a liquid coating 30 of an epoxy-modified silicone material-containing liquid material onto at least one of the first base material 21 and the second base material 22;
3. drying and/or curing the liquid coating 30 to obtain a bonding film 3 on at least one of the first base material 21 and the second base material 22;
4. imparting energy to the bonding film 3 to obtain an activated bonding film 3; and
5. contacting the first base material 21 and the second base material 22 via the activated bonding film 3, so as to obtain a bonded structure 1 in which the first base material 21 and the second base material 22 are bonded together via the bonding film 3.

The following describes First Embodiment of a bonding method of the invention step by step.

### First Embodiment

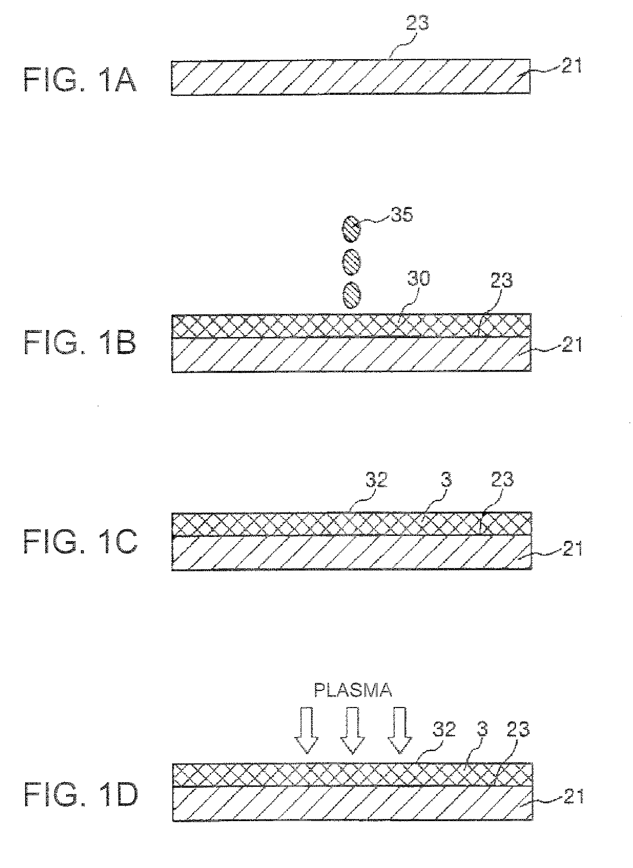

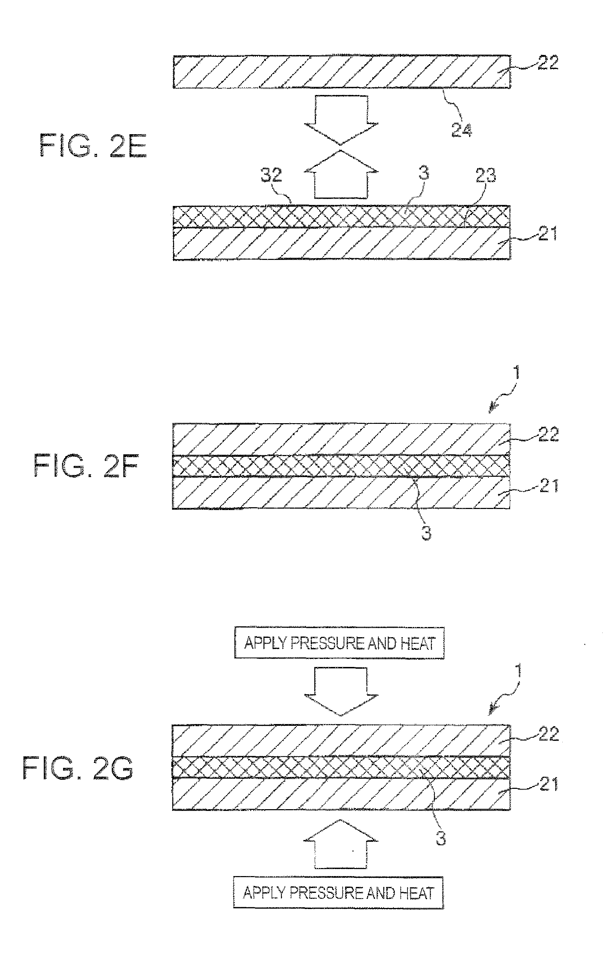

Figs. 1A to 1D and Figs. 2E to 2G are drawings (longitudinal sections) explaining the First Embodiment of a bonding method of the invention. In the following, the upper and lower sides of Figs. 1A to 1D and Figs. 2E to 2G will be referred to as "upper" and "lower", respectively.

Step 1: First, a first base material 21 and a second base material 22 are prepared, as illustrated in Fig. 1A. In Fig. 1A, a second base material 22 is omitted.

The materials of the first base material 21 and the second base material 22 are not particularly limited, and the following materials can be used, for example.

Polyolefins such as polyethylene, polypropylene, ethylene-propylene copolymer, ethylene-acrylic ester copolymer, ethylene-acrylic acid copolymer, polybutene-1, and ethylene-vinyl acetate copolymer (EVA); polyesters such as cyclic polyolefin, modified polyolefin, polyvinyl chloride, polyvinylidene chloride, polystyrene, polyamide, polyimide, polyamideimide, polycarbonate, poly-(4-methylpentene-1), ionomer, acryl-based resin, polymethylmethacrylate(PMMA), acrylonitrile-butadiene-styrene copolymer (ABS resin), acrylonitrile-styrene copolymer (AS resin), butadiene-styrene copolymer, polyoxymethylene, polyvinyl alcohol (PVA), ethylene-vinyl alcohol copolymer (EVOH), polyethylene terephthalate (PET), polyethylene naphthalate, polybutylene terephthalate (PBT), and polycyclohexaneterephthalate (PCT); polyether; polyetherketone (PEK); polyether ether ketone (PEEK); polyetherimide; polyacetal (POM); polyphenylene oxide; modified polyphenylene oxide; polysulfone; polyether sulfone; polyphenylene sulfide (PPS) ; polyallylate; aromatic polyester (liquid crystal polymer); polytetrafluoroethylene; polyvinylidene fluoride; resin-based materials such as fluoro-based resin, various thermoplastic elastomers (for example, styrene-based, polyolefin-based, polyvinyl chloride-based, polyurethane-based, polyester-based, polyamide-based, polybutadiene-based, trans-polyisoprene-based, fluororubber-based, and chlorinated polyethylene-based), epoxy resin, phenol resin, urea resin, melamine resin, aramid-based resin, unsaturated polyester, silicone resin, and polyurethane, or copolymers, blends, and polymer alloys containing these as the main material; metals such as Fe, Ni, Co, Cr, Mn, Zn, Pt, Au, Ag, Cu, Pd, Al, W, Ti, V, Mo, Nb, Zr, Pr, Nd, and Sm, or alloys containing these metals; metal-based materials such as carbon steel, stainless steel, indium tin oxide (ITO), and gallium arsenide; silicon-based materials such as monocrystalline silicon, polycrystalline silicon, and amorphous silicon; glass-based materials such as silicate glass (fused quartz), alkali silicate glass, soda-lime glass, potassium-lime glass, lead (alkali) glass, barium glass, and borosilicate glass; ceramic-based materials such as alumina, zirconia, MgAl₂O₄, ferrite, silicon nitride, aluminum nitride, boron nitride, titanium nitride, silicon carbide, boron carbide, titanium carbide, and tungsten carbide; carbon-based materials such as graphite; and composite materials combining one or more kinds of these materials.

The first base material 21 and the second base material 22 may be surface-treated by, for example, a plating treatment such as Ni plating, a passivation treatment such as chromate treatment, or a nitriding treatment.

The materials of the first base material 21 and the second base material 22 may be the same or different.

Preferably, the first base material 21 and the second base material 22 have substantially the same coefficient of thermal expansion. With substantially the same coefficient of thermal expansion, stress due to thermal expansion does not easily occur at the bonded interface of the first base material 21 and the second base material 22 when these materials are bonded together. This ensures that there will be no detachment in the bonded structure 1 produced. Preferably, the difference in thermal coefficients between the first and second base materials is no more than 5 x 10⁻⁵/K.

Note that, as will be described later, the first base material 21 and the second base material 22 can be strongly bonded together with high dimensional accuracy through optimization of bonding conditions in a later step (described later), even when the coefficients of thermal expansion are different.

Preferably, the base materials 21 and 22 have different rigidities. This enables the base materials 21 and 22 to be bonded even more strongly.

Further, at least one of the base materials 21 and 22 is preferably made of resin material. Being flexible, resin materials relieve the stress (for example, stress due to thermal expansion) generated at the bonded interface of the base materials 21 and 22 when these materials are bonded together. Because the bonded interface is not easily destroyed, the base materials 21 and 22 remain bonded to each other with high bond strength in the bonded structure 1.

From this perspective, it is preferable that at least one of the base materials 21 and 22 is flexible. In this way, the bond strength between the base materials 21 and 22 via the bonding film 3 can be further improved. When the base materials 21 and 22 are both flexible, the bonded structure 1 will be flexible as a whole, and thus will be highly functional.

The base materials 21 and 22 can have any shape, as long as they have a surface that can support the bonding film 3. For example, the base materials 21 and 22 may be in the form of plates (layers), lumps (blocks), or rods.

In the present embodiment, as illustrated in Figs. 1A to 1D and Figs. 2E to 2G, the base materials 21 and 22 are plate-like in shape. This makes the base materials 21 and 22 easily bendable, and the base materials 21 and 22 sufficiently undergo deformation in conformity with each other when stacked together. This improves the adhesion between the base materials 21 and 22 stacked together, and the bond strength of the base materials 21 and 22 in the bonded structure 1 produced.

Further, the bending of the base materials 21 and 22 is expected to relieve, to some extent, the stress that generates at the bonded interface.

The average thickness of the base materials 21 and 22 is not particularly limited, and each has an average thickness of preferably about 0.01 to 10 mm, more preferably about 0.1 to 3 mm.

As required, a surface treatment is performed to improve adhesion to the bonding film 3 formed on a bonding face 23 of the first base material 21. The surface treatment cleans and activates the bonding face 23, making it easier for the bonding film 3 to chemically act on the bonding face 23. As a result, the bond strength between the bonding face 23 and the bonding film 3 can be improved when the bonding film 3 is formed on the bonding face 23 in a subsequent step (described later).

The surface treatment includes, but is not particularly limited to, for example, physical surface treatment such as sputtering and a blast treatment; plasma treatment using, for example, oxygen plasma or nitrogen plasma; chemical surface treatment such as corona discharge, etching, electron ray irradiation, ultraviolet ray irradiation, and ozone exposure; and combinations of these.

When the first base material 21 subjected to surface treatment is made of a resin material (polymeric material), treatments such as corona discharge and nitrogen plasma treatment are particularly suitable.

When the surface treatment is plasma treatment or ultraviolet ray irradiation in particular, the bonding face 23 can be cleaned and activated more efficiently. As a result, the bond strength between the bonding face 23 and the bonding film 3 can be further improved.

Depending on the material of the first base material 21, sufficient bond strength for the bonding film 3 can be obtained without the surface treatment. Examples of such materials for the first base material 21 include materials whose main material is, for example, various metal materials, silicon materials, and glass materials exemplified above.

The first base material 21 made of such materials is coated with an oxide film on the surface, and large numbers of hydroxyl groups are attached (exposed) on the surface of the oxide film. Thus, with the first base material 21 coated with such an oxide film, the bond strength between the bonding face 23 of the first base material 21 and the bonding film 3 can be improved without the surface treatment.

Note that, in this case, the first base material 21 is not necessarily required to be entirely made of such material, and the material may be used in at least portions near the bonding face 23 where the bonding film 3 is formed.

Instead of surface treatment, an intermediate layer may be formed in advance on the bonding face 23 of the first base material 21.

The intermediate layer may have any function. For example, the intermediate layer may serve to improve adhesion to the bonding film 3, provide a cushioning effect (shock-absorbing function), or relieve stress concentration. By forming the bonding film 3 on the intermediate layer, the reliability of the bonded structure 1 can be improved.

Examples of the material of the intermediate layer include: metal-based material such as aluminum and titanium; oxide-based material such as metal oxide and silicon oxide; nitride-based material such as metal nitride and silicon nitride; carbon-based material such as graphite and diamond-like carbon; self-organizing film material such as a silane coupling agent, a thiol-based compound, metal alkoxide, and a metal-halogen compound; and resin-based material such as a resin-based adhesive, a resin film, a resin coating, various rubber materials, and various elastomers. These materials may be used in combinations of one or more.

Among the intermediate layers made of these materials, an intermediate layer made of oxide-based material is particularly effective in terms of improving the bond strength between the first base material 21 and the bonding film 3.

As with the first base material 21, a bonding face 24 of the second base material 22 (the surface brought to close contact with the bonding film 3 in a subsequent step; described later) may be subjected to surface treatment in advance to improve adhesion to the bonding film 3, as required. This is to clean and activate the bonding face 24. In this way, the bond strength between the bonding face 24 and the bonding film 3 can be improved when the bonding face 24 and the bonding film 3 are brought into close contact with each other and bonded together in a subsequent step (described later).

The surface treatment is not particularly limited, and the same surface treatment used for the bonding face 23 of the first base material 21 can be used.

Further, as in the case of the first base material 21, depending on the material of the second base material 22, a sufficient adhesion to the bonding film 3 can be obtained without the surface treatment. Examples of such materials for the second base material 22 include materials whose main material is, for example, various metal-based materials, silicon-based materials, and glass-based materials exemplified above.

The second base material 22 made of such materials is coated with an oxide film on the surface, and hydroxyl groups are attached (exposed) on the surface of the oxide film. Thus, with the second base material 22 coated with such an oxide film, the bond strength between the bonding face 24 of the second base material 22 and the bonding film 3 can be improved without the surface treatment.

Note that, in this case, the second base material 22 is not necessarily required to be entirely made of such material, and the material may be used in at least portions near the bonding face 24.

When the bonding face 24 of the second base material 22 has the groups or substances below, sufficient bond strength can be obtained between the bonding face 24 of the second base material 22 and the bonding film 3 without the surface treatment.

Examples of such groups and substances include at least one selected from the group consisting of: various functional groups such as a hydroxyl group, a thiol group, a carboxyl group, an amino group, a nitro group, and an imidazole group; eliminable intermediate molecules having various radicals, ring-opening molecules, or unsaturated bonds such as a double bond and a triple bond; halogens such as F, C1, Br, and I; and peroxide. Another example is a dangling bond of an unterminated atom resulting from the leaving of these groups.

Preferably, the eliminable intermediate molecules are hydrocarbon molecules having ring-opening molecules or unsaturated bonds. Such hydrocarbon molecules strongly act on the bonding film 3 based on the prominent reactivity of the ring-opening molecules and unsaturated bonds. Thus, the bonding face 24 with such hydrocarbon molecules is capable of forming particularly strong bonds with the bonding film 3.

The functional group of the bonding face 24 is preferably a hydroxyl group in particular. This enables the bonding face 24 to be bonded to the bonding film 3 particularly easily and strongly. Especially, when the hydroxyl group is exposed on the surface of the bonding film 3, the bonding face 24 and the bonding film 3 can be strongly bonded to each other in a short time period based on the hydrogen bonding between the hydroxyl groups.

Further, the second base material 22 can be strongly bonded to the bonding film 3 by appropriately selecting a surface treatment to provide the foregoing groups or substances on the bonding face 24.

Preferably, the hydroxyl group is present on the bonding face 24 of the second base material 22. In this way, a large attraction force generates between the bonding face 24 and a hydroxyl group-exposed surface of the bonding film 3 based on hydrogen bonding. As a result, the first base material 21 and the second base material 22 can be bonded to each other particularly strongly.

Instead of surface treatment, a surface layer may be formed in advance on the bonding face 24 of the second base material 22.

The surface layer may have any function. For example, as in the case of the first base material 21, the surface layer may serve to improve adhesion to the bonding film 3, provide a cushioning effect (shock-absorbing function), or relieve stress concentration. By bonding the second base material 22 and the bonding film 3 via the surface layer, the reliability of the bonded structure 1 can be improved.

The surface layer may be made of the same material used for the intermediate layer formed on the bonding face 23 of the first base material 21, for example.

Note that the surface treatment and the formation of the surface layer are optional, and may be omitted when high bond strength is not desired.

Step 2: Next, a liquid material 35 containing an epoxy-modified silicone material is supplied onto the bonding face 23 of the first base material 21. As a result, as illustrated in Fig. 1B, a liquid coating 30 is formed on the first base material 21.

The liquid material 35 may be applied to the bonding face 23 by methods, such as an immersion method, a droplet discharge method (for example, inkjet method), a spin coating method, a doctor blade method, a bar coat method, and brush coating. These may be used in combinations of one or more.

The viscosity (25°C) of the liquid material 35 is preferably in the range of generally about 0.5 to 200 mPa·s, more preferably about 3 to 20 mPa·s, though it varies slightly depending on the method of application on the bonding face 23. With the viscosity of the liquid material 35 falling in these ranges, the liquid coating 30 can easily be formed in a uniform thickness. Further, with the viscosity of the liquid material 35 falling in the foregoing ranges, the liquid material 35 contains the epoxy-modified silicone material in an amount necessary and sufficient for forming the bonding film 3.

Further, when a droplet discharge method is used to apply the liquid material 35 to the bonding face 23, the droplet amount (one droplet of the liquid material 35) can be set to, on average, about 0.1 to 40 pL, practically about 1 to 30 pL, provided that the viscosity of the liquid material 35 is in the foregoing ranges. In this way, the dot diameter of the droplets supplied onto the bonding face 23 will be small, ensuring formation of the bonding film 3 even when the bonding film 3 is in microscopic form.

As mentioned above, the liquid material 35 contains an epoxy-modified silicone material. However, when the epoxy-modified silicone material is available in liquid form and has a desired viscosity range alone, the epoxy-modified silicone material can be used directly as the liquid material 35. Further, when the epoxy-modified silicone material is available in solid or high-viscosity liquid form alone, a solution or dispersion of the epoxy-modified silicone material can be used as the liquid material 35.

Examples of the solvent or dispersion medium used to dissolve or disperse the epoxy-modified silicone material include inorganic solvents such as ammonia, water, hydrogen peroxide, carbon tetrachloride, and ethylene carbonate, and various organic solvents including: ketone-based solvents such as methyl ethyl ketone (MEK) and acetone; alcohol-based solvents such as methanol, ethanol, and isobutanol; ether-based solvents such as diethylether and diisopropylether; cellosolve-based solvents such as methyl cellosolve; aliphatic hydrocarbon-based solvents such as hexane and pentane; aromatic hydrocarbon-based solvents such as toluene, xylene, and benzene; aromatic heterocyclic compound-based solvents such as pyridine, pyrazine, and furan; amide-based solvents such as N,N-dimethylformamide (DMF); halogen compound-based solvents such as dichloromethane and chloroform; ester-based solvents such as ethyl acetate and methyl acetate; sulfur compound-based solvents such as dimethyl sulfoxide (DMSO) and sulfolane; nitrile-based solvents such as acetonitrile, propionitrile, and acrylonitrile; and organic acid-based solvents such as formic acid and trifluoroacetic acid. Mixed solvents containing these also can be used.

The epoxy-modified silicone material is a material contained in the liquid material 35, and that is the main material of the bonding film 3 formed by drying and/or curing the liquid material 35 in the next step 3.

In the following, the drying and/or curing of the liquid coating 30 (liquid material 35) formed on the first base material 21 also will be referred to simply as "drying and curing the liquid coating 30 (liquid material 35)". Specifically, this language may be used to refer to curing the epoxy-modified silicone material contained in the liquid coating 30 (liquid material 35), and drying the liquid coating 30 (liquid material 35) by removing solvent or dispersion medium when the liquid coating 30 (liquid material 35) contains a solvent or a dispersion medium.

As used herein, the "epoxy-modified silicone material" is a material contained in the liquid material 35, and that is the main material of the bonding film 3 formed by drying and curing the liquid material 35 in the next step 3, and that is obtained by the addition reaction between silicone material and epoxy resin.

The "silicone material" is a compound having a polyorganosiloxane backbone, in which the main backbone (main chain) is generally of primarily organosiloxane repeating units, and includes at least one silanol group. The silicone material may be of a branched structure including a branch in the main chain, or may be in cyclic form including a cyclic main chain, or may have a straight-chain structure in which the ends of the main chain are not joined.

For example, in a compound including the polyorganosiloxane backbone, the organosiloxane unit at the terminal portion has a structure unit represented by general formula (1) below. At the linking portion and the branched portion, the organosiloxane unit has structure units represented by general formulae (2) and (3) below, respectively.

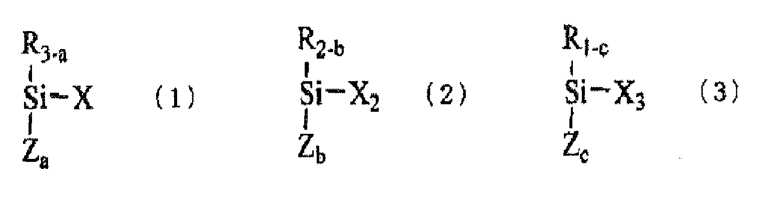

In the formulae, R each independently represents a substituted or unsubstituted hydrocarbon group, Z each independently represents a hydroxyl group or a hydrolyzable group, X represents a siloxane residue of the silicone material, a represents an integer of 1 to 3, b represents 0 or an integer of 1 to 2, and c represents 0 or 1.

The siloxane residue is a substituent forming a siloxane bond with the silicon atom of the adjacent structure unit via an oxygen atom, specifically an -O-(Si) structure (where Si is the silicon atom of the adjacent structure unit) .

In such a silicone material, the polyorganosiloxane backbone is preferably branched; specifically, it preferably has the structure unit represented by general formula (1), (2), or (3) . A compound having such a branched polyorganosiloxane backbone (hereinafter, also referred to as "branched compound") is a compound whose main backbone (main chain) is of primarily organosiloxane repeating units, and in which the organosiloxane repeating units branch out in a middle of the main chain, and in which the ends of the main chains are not joined.

With the branched compound, the branch chains of the compound in the liquid material 35 tangle together to form the bonding film 3 in the next step 3, and thus the resulting bonding film 3 has a particularly superior film strength.

Note that in general formulae (1) to (3), examples of the group R (substituted or unsubstituted hydrocarbon group) include: alkyl groups such as a methyl group, an ethyl group, and a propyl group; cycloalkyl groups such as a cyclopentyl group and a cyclohexyl group; aryl groups such as a phenyl group, a tolyl group, and a biphenylyl group; and aralkyl groups such as a benzyl group and a phenylethyl group. Some of or all of the hydrogen atoms attached to the carbon atoms of these groups may be substituted with, for example, (I) halogen atoms such as a fluorine atom, a chlorine atom, and a bromine atom, (II) epoxy groups such as a glycidoxy group, (III) (meth)acryloyl groups such as a methacryl group, or (IV) anionic groups such as a carboxyl group and a sulfonyl group.

When the group Z is a hydrolyzable group, examples of the hydrolyzable group include: alkoxy groups such as a methoxy group, an ethoxy group, a propoxy group, and a butoxy group; ketoxime groups such as a dimethyl ketoxime group and a methyl ethyl ketoxime group; acyloxy groups such as an acetoxy group; and alkenyloxy groups such as an isopropenyloxy group and an isobutenyloxy group.

The branched compound has an average molecular weight of preferably about 1 × 10⁴ to 1 × 10⁶, more preferably about 1 × 10⁵ to 1 × 10⁶. With the molecular weight set in these ranges, the viscosity of the liquid material 35 can be set in the foregoing ranges with relative ease.

It is preferable that the branched compound include a plurality of silanol groups (hydroxyl groups) within the compound. Specifically, in the structure units represented by general formulae (1) to (3), it is preferable to include a plurality of groups Z, and that these groups Z are hydroxyl groups. This ensures the bonding between the hydroxyl group of the branched compound and the epoxy group of the epoxy resin, thus ensuring the synthesis of the epoxy-modified silicone material obtained by the addition reaction between the branched compound and the epoxy resin. Further, in obtaining the bonding film 3 by drying and curing the liquid coating 30 in the next step 3, the hydroxyl groups contained in the residual silanol groups of the branched compound bind together in the epoxy-modified silicone material, improving the film strength of the resulting bonding film 3. Further, when the first base material 21 has the hydroxyl groups exposed on the bonding face (surface) 23 in the manner described above, the residual hydroxyl groups in the branched compound bind to the hydroxyl groups of the first base material 21. This enables bonding of the epoxy-modified silicone material to the first base material 21 both physically and chemically. As a result, the bonding film 3 is strongly bonded to the bonding face 23 of the first base material 21.

The branched compound preferably has a phenyl group as the hydrocarbon group within the compound. Specifically, the group R in the general formulae (1) to (3) preferably has a phenyl group. This further improves the reactivity of the silanol group of the branched compound (silicone material), and thus facilitates the bonding between the hydroxyl groups of the adjacent branched compounds. Further, by substituting at least one of the methyl groups of the branched compound with a phenyl group to include the phenyl group in the resulting bonding film 3, the film strength of the bonding film 3 can be further improved.

Non-phenyl hydrocarbon groups are preferably methyl groups. Specifically, non-phenyl groups R in the structure units of general formulae (1) to (3) are preferably methyl groups. Such compounds are available relatively easily and inexpensively. Further, in a later step 4, the methyl group can be easily cut by imparting energy to the bonding film 3, and adhesion can be reliably developed to the bonding film 3. Such compounds are therefore suitable as the branched compound (silicone material) for the epoxy-modified silicone material.

Taking the above into consideration, the silicone material, for example, is preferably a compound (branched compound) that has a unit structure of chemical formula (4) below as a branched portion, a unit structure of at least one of chemical formulae (5) and (6) below as a linking portion, and a unit structure of at least one of chemical formulae (7) and (8) below as a terminal portion.

R¹-Si-X₃ (4)

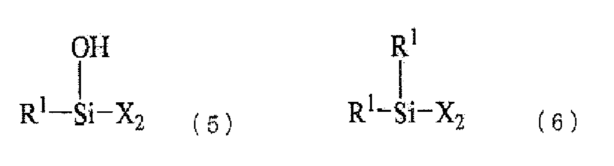

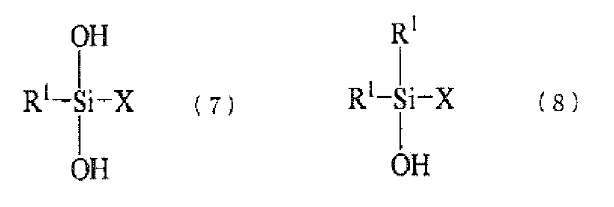

In the formulae, R¹ each independently represents a methyl group or a phenyl group, at least one of which represents a phenyl group, and X represents a siloxane residue of the silicone material.

The branched compound has a relatively high flexibility. Thus, in obtaining the bonded structure 1 by bonding the second base material 22 to the first base material 21 via the bonding film 3 in a later step 5, the stress due to the thermal expansion between the base materials 21 and 22 can be reliably relieved even when, for example, different materials are used for the first base material 21 and the second base material 22. This ensures that detachment does not occur in the bonded structure 1 produced.

Because the branched compound excels in chemical resistance, it can be effectively used for the bonding of members exposed to chemicals or the like for extended time periods. Specifically, for example, the bonding film 3 can reliably improve the durability of the droplet discharge head of industrial inkjet printers when used for the bonding in the manufacture of the head that uses organic-based ink, which easily corrodes the resin material. Further, because the branched compound also excels in heat resistance, it can be effectively used for the bonding of members exposed to high temperature.

As used herein, the "epoxy resin" is a compound with an epoxy group at an end, and may be a monomer, an oligomer, or a polymer having epoxy groups. Compounds with at least two epoxy groups per molecule are suitably used.

The addition reaction of the epoxy resin with the silicone material proceeds between the epoxy group of the epoxy resin and the silanol group (hydroxyl group) of the silicone material to give the epoxy-modified silicone material in which the epoxy resin is joined to the silicone material.

The epoxy resin is not particularly limited. Examples include bisphenol epoxy resin, glycidyl-ester epoxy resin, alicyclic epoxy resin, urethane-modified epoxy resin, silicon-containing epoxy resin, polyfunctional phenolic epoxy resin, and glycidyl-amine epoxy resin. These may be used in combinations of one or more.

The epoxy resin preferably includes a phenylene group within the molecule. When the bonding film 3 is formed with the epoxy-modified silicone material that contains such epoxy resin, the resulting bonding film 3 exhibits particularly superior film strength because of the phenylene group contained in the epoxy resin.

The epoxy resin preferably has a straight-chain molecular structure. The silicone material to which the epoxy resin is joined generally has the main backbone of polyorganosiloxane having a helical structure. Thus, the epoxy resin joined to the silicone material exists in a state of being exposed (projecting out) on the helical silicone material. Thus, with the straight-chain molecular structure, the epoxy resin in the epoxy-modified silicone material has more chance to contact with each other between adjacent molecules when obtaining the bonding film 3 by drying and curing the liquid coating 30 in the next step 3. As a result, the epoxy resin tangles together in the epoxy-modified silicone material, and the epoxy groups of the epoxy resin are chemically bound to each other by ring-opening polymerization. In this way, the film strength of the resulting bonding film 3 can be reliably improved.

When the first base material 21 has hydroxyl groups exposed on the bonding face (surface) 23 in the manner described above, and when the epoxy resin of the epoxy-modified silicone material is of a straight chain, the residual epoxy group in the epoxy resin and the hydroxyl group of the first base material 21 undergo addition reaction at an improved reaction rate. This ensures the bonding of the epoxy-modified silicone material to the first base material 21 both physically and chemically. As a result, the bonding film 3 is bonded to the bonding face 23 of the first base material 21 even more strongly.

Taking the above into consideration, it is preferable to use, for example, a bisphenol epoxy resin as the epoxy resin, specifically a bisphenol-A epoxy resin represented by general formula (9) below.

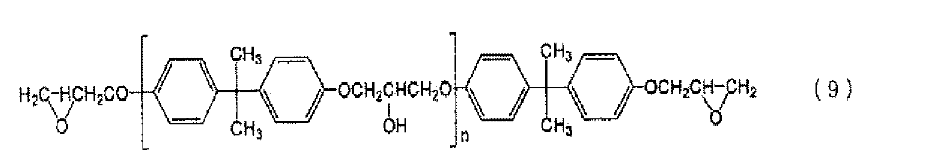

In the formula, n represents 0, or an integer of 1 or more.

Because the bisphenol epoxy resin excels in chemical resistance, the bonding film 3 using the bisphenol epoxy resin as the epoxy resin can be effectively used for the bonding of members exposed to chemicals or the like for extended time periods, and is suitable for the bonding of the members in the droplet discharge head of industrial inkjet printers. Further, because the bisphenol epoxy resin also excels in heat resistance, it can be effectively used for the bonding of members exposed to high temperature.

The liquid material 35 may contain additives in addition to the epoxy-modified silicone material. Examples of such additives include various amine compounds, and various acid compounds. The additives bind to the epoxy groups of the epoxy resin, and when the additives contain two or more amino groups or carboxyl groups, the epoxy groups can bind to each other via the additives. This further facilitates the bonding between the epoxy groups, improving the film strength of the resulting bonding film 3 even more reliably.

Acid compounds containing carboxyl groups are particularly preferable as the additives, because, in this case, a ketone group will be contained in the bonding film 3 formed by drying and curing the liquid coating 30 in the next step 3. When the first base material 21 is one in which the hydroxyl group is exposed on the bonding face (surface) 23 in the manner described above, because the ketone group of the bonding film 3 and the hydroxyl group of the first base material 21 are bonded together by hydrogen bonding, the bonding film 3 is bonded to the bonding face 23 of the first base material 21 even more strongly also by such bonds.

Step 3: Next, the liquid material 35 supplied onto the first base material 21, or specifically the liquid coating 30, is dried and/or cured. That is, when the liquid material 35 contains a solvent or a dispersion medium, the liquid coating 30 is dried, and the polyester-modified silicone material contained in the liquid coating 30 is cured. As a result, as illustrated in Fig. 1C, the bonding film 3 is formed on the first base material 21.

The method of drying and curing the liquid coating 30 is not particularly limited, and a method of heating the liquid coating 30 is preferably used. With this method, the liquid coating 30 can be dried and cured both easily and reliably by the simple method of heating the liquid coating 30.

Specifically, when the simple method of heating the liquid coating 30 is used, the liquid coating 30, when it contains a solvent, can be dried by removing the solvent therefrom, and cured by the dehydrocondensation reaction between the hydroxyl groups that originate in the silicone material contained in the epoxy-modified silicone material, and the addition reaction between the hydroxyl groups and the epoxy groups that originate in the epoxy resin. When the liquid coating 30 does not contain a solvent, the liquid coating 30 can be dried and cured by the dehydrocondensation reaction between the hydroxyl groups that originate in the silicone material contained in the epoxy-modified silicone material, and the addition reaction between the hydroxyl groups and the epoxy groups that originate in the epoxy resin.

When the bonding film 3 is formed by drying and curing the liquid coating 30 in the manner described above, the film strength of the bonding film 3 can be improved by the chemical bonds formed by the dehydrocondensation reaction between the silanol groups (hydroxyl groups) that originate in the silicone material, the addition reaction between the silanol groups and the epoxy groups that originate in the epoxy resin, and the ring-opening polymerization of the epoxy groups.

Further, at the interface between the bonding film 3 and the first base material 21, chemical bonds are formed by the dehydrocondensation reaction between the silanol group that originates in the silicone material contained in the epoxy-modified silicone material and the hydroxyl group exposed on the surface of the first base material 21, and by the addition reaction between the epoxy group that originates in the epoxy resin and the hydroxyl group exposed on the surface of the first base material 21. The bonding film 3 therefore has superior adhesion to the first base material 21.

The heating temperature of the liquid coating 30 is preferably 25°C or more, more preferably about 150°C to 250°C.

The heating time is preferably about 0.5 to 48 hours, more preferably about 15 to 30 hours.

Note that when the liquid coating 30 (liquid material 35) contains a catalyst, the heating temperature and heating time of the liquid coating 30 can be reduced.

By drying and curing the liquid coating 30 under these conditions, the bonding film 3 desirably developing adhesion can be reliably formed by imparting energy in the next step 4. Further, because of the chemical bonds formed within the bonding film 3 and between the bonding film 3 and the first base material 21, the resulting bonding film 3 excels in film strength, and is strongly bonded to the first base material 21.

The pressure of the heating atmosphere may be atmospheric pressure, preferably reduced pressure. Specifically, the reduced pressure is preferably about 133.3 × 10⁻⁵ to 1, 333 Pa (1 × 10⁻⁵ to 10 Torr), more preferably about 133.3 × 10⁻⁴ to 133.3 Pa (1 × 10⁻⁴ to 1 Torr). This increases the film density of the bonding film 3 (densification), and thus further improves the film strength of the bonding film 3.

As described above, by appropriately setting the conditions of forming the bonding film 3, the film strength or other properties of the resulting bonding film 3 can be altered as desired.

The average thickness of the bonding film 3 is preferably from about 10 to 10,000 nm, more preferably about 3,000 to 6,000 nm. By appropriately setting the supply amount of the liquid material 35 to confine the average thickness of the bonding film 3 in the foregoing ranges, there will be no significant decrease in the dimensional accuracy of the bonded structure of the first base material 21 and the second base material 22, and these materials can be bonded to each other even more strongly.

In other words, when the average thickness of the bonding film 3 is below the foregoing lower limit, sufficient bond strength may not be obtained between the first base material 21 and the second base material 22 bonded together via the bonding film 3. On the other hand, an average thickness of the bonding film 3 above the foregoing upper limit may lead to a significant decrease in the dimensional accuracy of the bonded structure.

Further, with the average thickness of the bonding film 3 falling in the foregoing ranges, the bonding film 3 becomes elastic to some extent. Thus, when bonding the first base material 21 and the second base material 22 in a later step 5, any particles or objects that may be present on the bonding face 24 of the second base material 22 brought into contact with the bonding film 3 can be entrapped by the bonding film 3 bonded to the bonding face 24. Thus, the bond strength between the bonding film 3 and the bonding face 24 will not be lowered by the presence of such particles, or detachment at the interface can be appropriately suppressed or prevented.

Further, in the embodiment of the invention, because the bonding film 3 is formed by supplying the liquid material 35, any irregularities that may be present on the bonding face 23 of the first base material 21 can be absorbed by the bonding film 3 conforming to the shape of such irregularities, though it depends on the height of the irregularities. As a result, a surface 32 of the bonding film 3 becomes substantially flat.

Step 4: Next, energy is imparted to the surface 32 of the bonding film 3 formed on the bonding face 23.

The energy imparted to the bonding film 3 cuts some of the molecular bonds (for example, Si-CH₃ bonds, Si-Phe) near the surface 32 of the bonding film 3, and thereby activates the surface 32. As a result, adhesion is developed near the surface 32 with respect to the second base material 22.

The first base material 21 in this state is strongly bondable to the second base material 22 by chemical bonding.

As used herein, the "activated" state of the surface 32 refers to a state in which some of the molecular bonds on the surface 32 of the bonding film 3, specifically, for example, the methyl group of the polydimethylsiloxane backbone is cut to produce unterminated bonds (hereinafter, also referred to as "dangling bonds") in the bonding film 3, or a state in which the dangling bond is terminated by the hydroxyl group (OH group) . These states, including a coexisting state of these, are collectively referred to as the "activated" state of the bonding film 3.

Any method can be used to impart energy to the bonding film 3. Examples include irradiating the bonding film 3 with energy rays, heating the bonding film 3, applying a compression force (physical energy) to the bonding film 3, contacting a plasma to the bonding film 3 (imparting plasma energy), and contacting ozone gas to the bonding film 3 (imparting chemical energy) . In this way, the surface of the bonding film 3 can be efficiently activated.

Among these methods, it is particularly preferable to impart energy to the bonding film 3 by contacting a plasma to the bonding film 3, as illustrated in Fig. 1D.

Before explaining the reason the plasma contact of the bonding film 3 is preferable as the method of imparting energy to the bonding film 3, problems associated with using the ultraviolet ray as the energy ray and irradiating the bonding film 3 with the ultraviolet ray are addressed.

A: Activation of the surface 32 of the bonding film 3 takes a long time (for example, 1 to several tens of minutes) . Further, when the duration of the ultraviolet ray irradiation is brief, the bonding of the first base material 21 and the second base material 22 takes a long time (at least several ten minutes) in the bonding step. That is, it takes a long time to obtain the bonded structure 1.

B: When the ultraviolet ray is used, the ultraviolet ray has the likelihood of passing through the bonding film 3 in its thickness direction. Thus, depending on the material (for example, resin material) of the base material (the first base material 21 in this embodiment), the interface (contacting face) between the base material and the bonding film 3 degrades, and the bonding film 3 easily detaches from the base material.

Further, the ultraviolet ray acts on the entire portion of the bonding film 3 as it passes through the bonding film 3 in a direction of thickness, cutting and removing, for example, the methyl group of the polydimethylsiloxane backbone throughout the bonding film 3. Specifically, the amounts of organic components in the bonding film 3 become notably low, and the film becomes more inorganic. As a result, the flexibility of the bonding film 3 attributed to the presence of the organic components is reduced over all, and the resulting bonded structure 1 becomes susceptible to interlayer detachment in the bonding film 3.

C: When the bonded structure 1 is recycled or reused by detaching and separating the first base material 21 from the second base material 22, the base materials 21 and 22 are detached by imparting detachment energy to the bonded structure 1. Here, for example, the residual methyl group (organic component) in the bonding film 3 is cut and removed from the polydimethylsiloxane backbone, and the organic component so cut becomes a gas. The gas (gaseous organic component) then dissociates the bonding film 3 into pieces.

However, in the case of ultraviolet ray irradiation, because the bonding film 3 becomes more inorganic throughout in the manner described above, only a fraction of the organic component turns into a gas in response to the imparted detachment energy, and the bonding film 3 is hardly dissociated.

In contrast, in the plasma exposure of the surface 32 of the bonding film 3, some of the molecular bonds in the material forming the bonding film 3, for example, the methyl group of the polydimethylsiloxane backbone is selectively cut near the surface 32 of the bonding film 3.

Note that the plasma cutting of the molecular bond occurs in an extremely short time period because it is induced not only by the chemical action based on the plasma charge, but by the physical action based on the Penning effect of the plasma. Thus, the bonding film 3 can be activated in an extremely short time period (for example, on the order of several seconds), and as a result the bonded structure 1 can be produced in a short time.

The plasma selectively acts on the surface 32 of the bonding film 3, and hardly affects inside the bonding film 3. Thus, the cutting of the molecular bond selectively occurs near the surface 32 of the bonding film 3. In other words, the bonding film 3 is selectively activated near the surface 32. Accordingly, the problems associated with the activation of the bonding film 3 by the ultraviolet ray (problems B and C above) are unlikely to occur.

In this manner, by using plasma for the activation of the bonding film 3, interlayer detachment of the bonding film 3 in the bonded structure 1 hardly occurs, and the first base material 21 can be reliably detached from the second base material 22 when such a procedure is needed.

In the ultraviolet ray activation of the bonding film 3, the extent to which the bonding film 3 is activated is highly dependent on the intensity of the ultraviolet ray irradiation. Thus, the ultraviolet ray irradiation needs to be performed under strictly controlled conditions, in order to activate the bonding film 3 to such an extent suitable for the bonding of the first base material 21 and the second base material 22. Without such strict control, there will be variation in the bond strength between the first base material 21 and the second base material 22 in the resulting bonded structure 1.

In contrast, in the plasma activation of the bonding film 3, the activation of the bonding film 3 proceeds more gradually in a manner that depends on the density of the contacted plasma. Accordingly, the conditions of plasma generation does not require strict control for the activation of the bonding film 3 to an extent suitable for the bonding of the first base material 21 and the second base material 22. In other words, the plasma activation of the bonding film 3 is more tolerant in terms of manufacturing conditions of the bonded structure 1. Further, variation in the bond strength between the first base material 21 and second base material 22 in the bonded structure 1 hardly occurs even without any strict control.

The ultraviolet ray activation of the bonding film 3 is less preferred because the bonding film 3 itself may shrink (especially, in thickness) as a result of activation, or specifically as a result of the elimination of the organics in the bonding film 3. If the bonding film 3 shrinks, a weaker bond between the first base material 21 and the second base material 22 may be formed.

In contrast, the bonding film 3 is less prone to shrinking with the plasma activation of the bonding film 3 that selectively activates near the surface of the bonding film 3 in the manner described above. Thus, the first base material 21 and the second base material 22 can be bonded to each other with a high bond strength even when the bonding film 3 is relatively thin. Further, in this case, the bonded structure 1 can have high dimensional accuracy, and the thickness of the bonded structure 1 can be reduced.

As described above, plasma activation of the bonding film 3 has advantages over ultraviolet ray activation of the bonding film 3.

The plasma may be contacted with the bonding film 3 under reduced pressure, or preferably under atmospheric pressure. Specifically, it is preferable that the bonding film 3 be treated with an atmospheric pressure plasma. In the atmospheric pressure plasma treatment, because the surroundings of the bonding film 3 is not reduced pressure, for example, the methyl group of the polydimethylsiloxane backbone of the epoxy-modified silicone material will not be cut unnecessarily when cutting and removing the methyl group (during the activation of the bonding film 3) by the action of plasma.

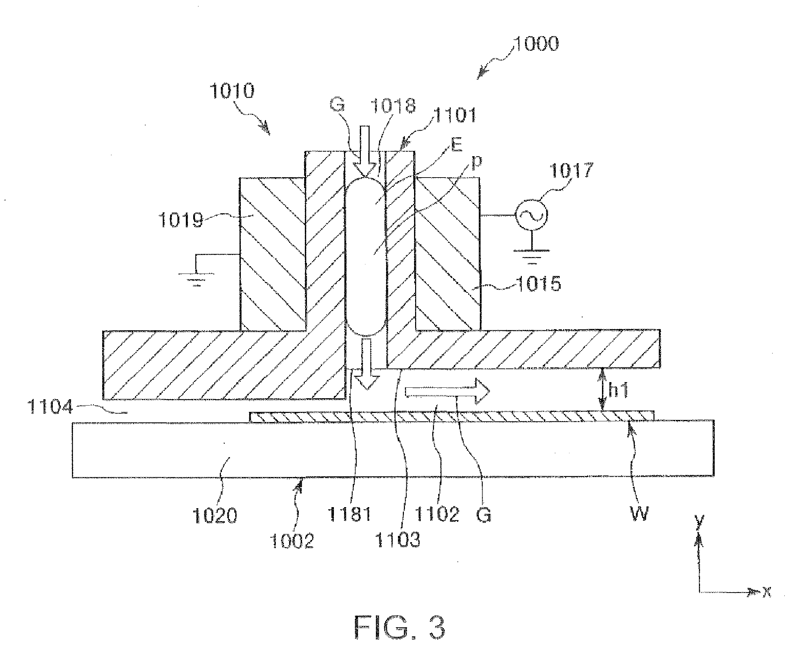

The plasma treatment under atmospheric pressure can be performed using, for example, the atmospheric pressure plasma treatment apparatus illustrated in Fig. 3.

Fig. 3 is a schematic diagram showing a structure of the atmospheric pressure plasma apparatus.

An atmospheric pressure plasma apparatus 1000 illustrated in Fig. 3 includes a carrier unit 1002 provided for the transport of the first base material 21 on which the bonding film 3 has been formed (hereinafter, simply referred to as "worked substrate W"), and a head 1010 disposed above the carrier unit 1002.

The atmospheric pressure plasma apparatus 1000 includes a plasma generating region p, where a plasma is generated, formed between an apply electrode 1015 and a counter electrode 1019 of the head 1010.

The structure of each component is described below.

The carrier unit 1002 includes a movable stage 1020 that can carry the worked substrate W. The movable stage 1020 is made movable along the direction of x axis by the activation of a moving section (not shown) provided for the carrier unit 1002.

The movable stage 1020 is made of metal materials such as stainless steel and aluminum.

The head 1010 includes a head main body 1101, in addition to the apply electrode 1015 and the counter electrode 1019.

In the head 1010, a gas supply channel 1018 is provided through which a processing plasma gas G is supplied to a gap 1102 between an upper surface of the movable stage 1020 (carrier unit 1002) and a lower face 1103 of the head 1010.

The gas supply channel 1018 has an opening 1181 formed at the lower face 1103 of the head 1010. As illustrated in Fig. 3, there is a step difference on the left of the lower face 1103. Accordingly, a gap 1104 between the left-hand side of the head main body 1101 and the movable stage 1020 is smaller (narrower) than the gap 1102. This suppresses or prevents the processing plasma gas G from entering the gap 1104, producing a preferential flow of the processing plasma gas G in the positive direction along the x axis.

The head main body 1101 is made of dielectric materials such as alumina and quartz.

In the head main body 1101, the apply electrode 1015 and the counter electrode 1019 are disposed face to face with the gas supply channel 1018 in between, so as to form a pair of parallel-plate electrodes. The apply electrode 1015 is electrically connected to a high-frequency power supply 1017. The counter electrode 1019 is grounded.

The apply electrode 1015 and the counter electrode 1019 are made of metal materials such as stainless steel and aluminum.

In the plasma treatment of the worked substrate W with the atmospheric pressure plasma apparatus 1000, voltage is applied between the apply electrode 1015 and the counter electrode 1019 to generate an electric field E. In this state, the processing gas G is flown into the gas supply channel 1018. The processing gas G flown into the gas supply channel 1018 discharges under the influence of the electric field E, and a plasma gas is produced. The resulting processing plasma gas G is then supplied into the gap 1102 through the opening 1181 on the lower face 1103. As a result, the processing plasma gas G contacts the surface 32 of the bonding film 3 formed on the worked substrate W, thus completing the plasma treatment.

With the atmospheric pressure plasma apparatus 1000, the plasma is able to contact the bonding film 3 both easily and reliably, enabling activation of the bonding film 3.

Here, the distance between the apply electrode 1015 and the movable stage 1020 (worked substrate W), or specifically the height of the gap 1102 (length h1 in Fig. 3) is appropriately selected taking into account such factors as the output of the high-frequency power supply 1017, and the type of plasma treatment performed on the worked substrate W. Preferably, the distance is about 0.5 to 10 mm, more preferably about 0.5 to 2 mm. In this way, the activation of the bonding film 3 by the plasma contact can be performed even more reliably.

The voltage applied between the apply electrode 1015 and the counter electrode 1019 is preferably from about 1.0 to 3.0 kVp-p, more preferably from about 1.0 to 1.5 kVp-p. This further ensures the generation of electric field E between the apply electrode 1015 and the movable stage 1020, and the processing gas G supplied into the gas supply channel 1018 can be reliably turned into a plasma gas.

The frequency of the high-frequency power supply 1017 (the frequency of applied voltage) is not particularly limited, and is preferably about 10 to 50 MHz, more preferably about 10 to 40 MHz.

The type of processing gas G is not particularly limited, and rare gases such as helium gas and argon gas, and oxygen gas can be used, for example. These may be used in combinations of one or more. Gases containing a rare gas as the primary component are preferably used as the processing gas G, and gases containing helium gas as the primary component are particularly preferable.

More specifically, the plasma used for the treatment is preferably produced from a gas that contains helium gas as the primary component. The gas containing helium gas as the primary component (processing gas G) does not easily generate ozone when turned into a plasma gas, and thus the ozone alteration (oxidation) on the surface 32 of the bonding film 3 can be prevented. This suppresses the reduction in the extent of bonding film 3 activation; in other words, the bonding film 3 can be reliably activated. Further, the helium gas-based plasma has an extremely high Penning effect, and is therefore also preferable in terms of reliably activating the bonding film 3 in a short time period.

In this case, the supply rate of the gas that contains helium gas as the primary component to the gas supply channel 1018 is preferably from about 1 to 20 SLM, more preferably from about 5 to 15 SLM. This makes it easier to control the extent of bonding film 3 activation.

The helium gas content of the gas (processing gas G) is preferably 85 vol% or more, more preferably 90 vol% or more (including 100%). In this way, the foregoing effects can be exhibited even more effectively.

The mobility rate of the movable stage 1020 is not particularly limited, and is preferably about 1 to 20 mm/second, more preferably about 3 to 6 mm/second. By allowing the plasma to contact the bonding film 3 at such a rate, the bonding film 3 can be activated sufficiently and reliably despite the short contact time.

Step 5: Next, the first base material 21 and the second base material 22 are mated to each other with the bonding film 3 closely in contact with the second base material 22 (see Fig. 2E) . Because the surface 32 of the bonding film 3 has developed adhesion for the second base material 22 in the foregoing step 4, the bonding film 3 and the bonding face 24 of the second base material 22 are chemically bonded to each other. As a result, the first base material 21 and the second base material 22 are bonded together via the bonding film 3, and the bonded structure 1 as illustrated in Fig. 2F is obtained.

Because the bonding method does not require a high-temperature heat treatment (for example, 700°C or more), the first base material 21 and the second base material 22 can be bonded even when these materials are made of low heat resistance materials.

Further, because the first base material 21 and the second base material 22 are bonded to each other via the bonding film 3, there is no restriction to the materials of the base materials 21 and 22.

Thus, the invention allows a wide range of material to be used as the first base material 21 and the second base material 22.

If the first base material 21 and the second base material 22 have different coefficients of thermal expansion, the bonding temperature should be kept as low as possible. By bonding under low temperatures, the thermal stress that generates at the bonded interface can be further reduced.

Specifically, the first base material 21 and the second base material 22 are bonded to each other at the material temperature of about 25°C to 50°C, more preferably about 25°C to 40°C, though it depends on the difference in the coefficient of thermal expansion between the first base material 21 and the second base material 22. With these temperature ranges, the thermal stress generated at the bonded interface can be sufficiently reduced even when there is some large difference in the coefficient of thermal expansion between the first base material 21 and the second base material 22. As a result, defects such as warping and detachment can be reliably suppressed or prevented in the bonded structure 1.

Specifically, in this case, when the difference in the thermal expansion coefficients of the first base material 21 and the second base material 22 is 5 × 10⁻⁵/K or more, it is particularly recommended that bonding be performed as low a temperature as possible.

The following describes the mechanism by which the first base material 21 and the second base material 22 are bonded in this step, more specifically the mechanism by which the surface 32 of the bonding film 3 and the bonding face 24 of the second base material 22 are bonded to each other.

Taking as an example the second base material 22 including the hydroxyl group exposed on the bonding face 24, mating the first base material 21 and the second base material 22 with the bonding film 3 of the first base material 21 in contact with the bonding face 24 of the second base material 22 in step 5 produces hydrogen-bond attraction between the hydroxyl group on the surface 32 of the bonding film 3 and the hydroxyl group on the bonding face 24 of the second base material 22, thus generating an attraction force between the hydroxyl groups. Presumably, the first base material 21 and the second base material 22 are bonded to each other by this attraction force.

The hydroxyl groups attracted to each other by hydrogen bonding are cut from the surfaces by accompanying dehydrocondensation, depending on temperature or other conditions. As a result, the atoms originally attached to the hydroxyl groups form bonds at the contact interface between the first base material 21 and the second base material 22. This is believed to be the basis of the strong bond between the first base material 21 and the second base material 22.

When unterminated bonds, or specifically dangling bonds exist on the surface or inside the bonding film 3 of the first base material 21, and on the surface or inside the bonding face 24 of the second base material 22, these dangling bonds rejoin when the first base material 21 and the second base material 22 are mated together. The rejoining of the dangling bonds occurs in a complicated manner that involves overlap or tangling, and thus a network of bonds is formed on the bonded interface. As a result, the bonding film 3 and the second base material 22 are bonded to each other particularly strongly.

The activated state of the surface of the bonding film 3 activated in step 4 attenuates over time. It is therefore preferable that step 5 be performed as soon as step 4 is finished. Specifically, it is preferable to perform step 5 within 60 minutes after step 4, more preferably within 5 minutes after step 4. With these time ranges, the activated state of the bonding film 3 surface is sufficiently maintained, and sufficient bond strength can be obtained when the first base material 21 and the second base material 22 are mated to each other.

In other words, because the bonding film 3 before activation is a bonding film obtained by drying and curing the epoxy-modified silicone material, the bonding film 3 is relatively chemically stable, and excels in weather resistance. Thus, the bonding film 3 before activation is suited for long storage. By taking advantage of this, the first base material 21 including such a bonding film 3 may be produced or purchased in a large quantity and stored for later use, and energy may be imparted as in step 4 only in a required quantity immediately before mating it as in the presently described step. This is effective in terms of efficient manufacture of the bonded structure 1.

The bonded structure (a bonded structure of an embodiment of the invention) 1 illustrated in Fig. 2F can be obtained in the manner described above.

The bonded structure 1 obtained as above can exhibit bond strength both in the thickness and plane directions of the first base material 21 and the second base material 22.

The bond strength in the thickness direction of the first base material 21 and the second base material 22 is preferably 5 MPa (50 kgf/cm²) or more, more preferably 10 MPa (100 kgf/cm²) or more. The bonded structure 1 having such a bond strength in the thickness direction can sufficiently prevent detachment of the bonding film 3 against stretch. Further, with the bonding method according to the embodiment of the invention, the bonded structure 1 can be efficiently produced in which the first base material 21 and the second base material 22 are bonded to each other with a large bond strength.

Note that when obtaining the bonded structure 1 or after the bonded structure 1 is obtained, the bonded structure 1 may be subjected to at least one of the two steps (6A and 6B; the steps of increasing the bond strength of the bonded structure 1) below, as required. In this way, the bond strength of the bonded structure 1 can be further improved with ease.

Step 6A: As illustrated in Fig. 2G, the bonded structure 1 is pressed to bring the first base material 21 and the second base material 22 towards each other.

In this way, the surfaces of the bonding film 3 closely contact the surface of the first base material 21 and the surface of the second base material 22, and the bond strength of the bonded structure 1 can be further improved.

Further, by pressing the bonded structure 1, any gap that may be present at the bonded interface in the bonded structure 1 can be flattened to further increase the bonding area. This further improves the bond strength of the bonded structure 1.

Note that the pressure may be appropriately adjusted according to conditions such as the material and thickness of the first base material 21 and the second base material 22, and the bonding apparatus. Specifically, the pressure is preferably about 5 to 60 MPa, more preferably about 20 to 50 MPa, though it is slightly variable depending on factors such as the material and thickness of the first base material 21 and the second base material 22. In this way, the bond strength of the bonded structure 1 can be reliably improved. The pressure may exceed the foregoing upper limit; however, in this case, damage or other defects may occur in the first base material 21 and the second base material 22 depending on the material of the base materials 21 and 22.

The pressure time is not particularly limited, and is preferably about 10 seconds to 30 minutes. The pressure time may be appropriately varied according to the applied pressure. Specifically, the pressure time can be made shorter with increase in applied pressure on the bonded structure 1. The bond strength also can be improved in this case.

Step 6B: The bonded structure 1 is heated in the manner shown in Fig. 2G.

This further improves the bond strength of the bonded structure 1.

Here, the heating temperature of the bonded structure 1 is not particularly limited as long as it is higher than room temperature and below the heat resistant temperature of the bonded structure 1. Preferably, the heating temperature is about 25°C to 100°C, more preferably about 50°C to 100°C. With the heating temperature in these ranges, the heat alteration or degradation of the bonded structure 1 can be reliably prevented, and the bond strength can be reliably improved.

The heating time is not particularly limited, and is preferably about 1 to 30 minutes.

When performing both steps 6A and 6B, it is preferable that these steps be performed simultaneously. Specifically, as illustrated in Fig. 2G, it is preferable to heat the bonded structure 1 while applying pressure. This provides synergy from the pressure and heat application, and the bond strength of the bonded structure 1 can be particularly improved.

By performing these steps, the bond strength of the bonded structure 1 can be further improved with ease.

### Second Embodiment

Second Embodiment of a bonding method of the invention is described below.

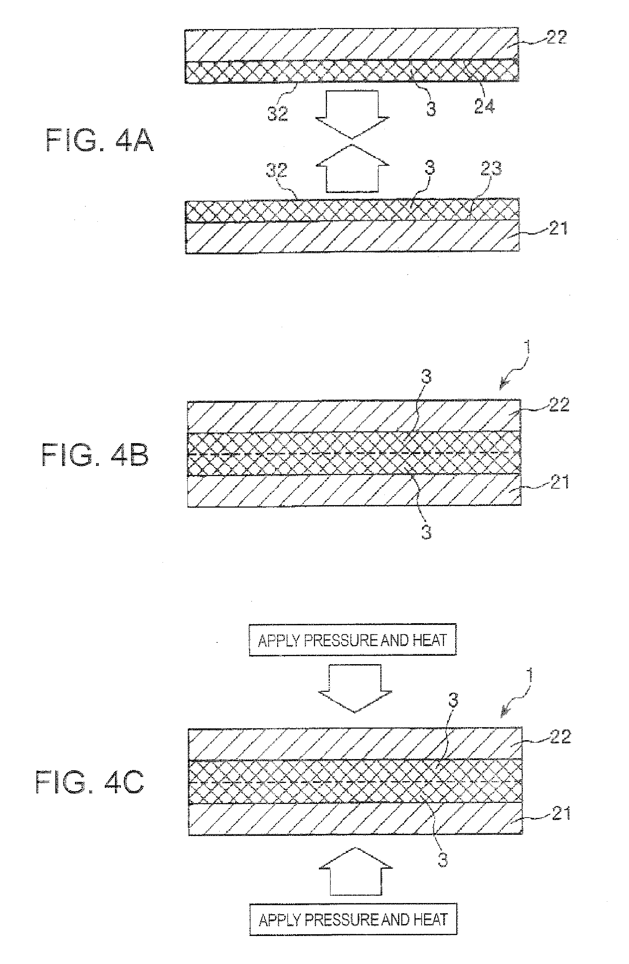

Figs. 4A to 4C are diagrams (longitudinal sections) explaining the Second Embodiment of a bonding method of the invention. In the descriptions below, the upper and lower sides of Figs. 4A to 4C will be referred to as "upper" and "lower", respectively.

The description of the Second Embodiment will be given with a primary focus on differences from the bonding method of the First Embodiment, and matters already described will not be described.

In the bonding method according to the present embodiment, the bonding film 3 is also formed on the bonding face (surface) 24 of the second base material 22, in addition to being formed on the bonding face (surface) 23 of the first base material 21. The present embodiment does not differ from the foregoing First Embodiment except that adhesion is developed near the surfaces 32 of the bonding films 3 of the base materials 21 and 22, and that the bonded structure 1 is obtained by bonding the first base material 21 and the second base material 22 to each other with the bonding films 3 in contact with each other.

Specifically, the bonding method of the present embodiment is a method for bonding the first base material 21 and the second base material 22 by forming the bonding film 3 on both the first base material 21 and the second base material 22, and integrating these bonding films 3 together.
Step 1': The first base material 21 and the second base material 22 are prepared as in step 1.
Step 2': The bonding film 3 is formed on the bonding face 23 of the first base material 21 and on the bonding face 24 of the second base material 22, as in steps 2 and 3.
Step 3': Energy is imparted to the bonding films 3 formed on the first base material 21 and the second base material 22 to develop adhesion near the surface 32 of each bonding film 3, as in step 4.
Step 4': The base materials 21 and 22 are bonded to each other with the bonding films 3 developing adhesion closely in contact with each other, as illustrated in Fig. 4A. In this way, the bonded structure 1 as illustrated in Fig. 4B is obtained in which the base materials 21 and 22 are bonded to each other by their respective bonding films 3.

The bonded structure 1 can be obtained in this manner.

After the bonded structure 1 is obtained, the bonded structure 1 may be subjected to at least one of the steps 6A and 6B of the First Embodiment, as required.

For example, as illustrated in Fig. 4C, the bonded structure 1 is heated while pressure is applied so as to bring the base materials 21 and 22 of the bonded structure 1 closer together. This promotes the dehydrocondensation of the hydroxyl groups and rejoining of the dangling bonds at the interface between the bonding films 3. As a result, the bonding films 3 are further integrated and finally become one piece almost completely.

In the First and Second Embodiments, the bonding film 3 is described as being formed on the whole surface of one of or both of the first base material 21 and the second base material 22. However, in the invention, the bonding film 3 may be selectively formed on regions of the surface of one of or both of the first base material 21 and the second base material 22.

In this case, the bonding regions of the first base material 21 and the second base material 22 can easily be selected by appropriately setting the size of the regions where the bonding film 3 is formed. In this way, for example, the bond strength of the bonded structure 1 can be easily adjusted by controlling, for example, the area or shape of the bonding films 3 used to bond the first base material 21 and the second base material 22. As a result, the bonded structure 1 can be obtained in which, for example, the bonding films 3 can be easily detached.

Specifically, the strength (splitting strength) required for the separation of the bonded structure 1 can be adjusted while the bond strength of the bonded structure 1 can be adjusted.

From this viewpoint, when producing a bonded structure 1 that is easily separable, it is preferable that the bonded structure 1 have such a bond strength that separation is possible with human hands. In this way, the bonded structure 1 can easily be separated without using machines or other means.

Further, localized stress concentration at the bonding films 3 can be relieved by appropriately setting the area or shape of the bonding films 3 used to bond the first base material 21 and the second base material 22. In this way, the base materials 21 and 22 can be reliably bonded to each other even when, for example, there is a large difference in the coefficient of thermal expansion between the first base material 21 and the second base material 22.

Further, in this case, a space with the distance (height) corresponding to the thickness of the bonding films 3 is formed between the first base material 21 and the second base material 22 in a region (film devoid region) 42 in which the bonding films 3 are not formed. By taking advantage of such a space, a closed space or a channel can be formed between the first base material 21 and the second base material 22 by appropriately adjusting the shape of the region (film forming region) where the bonding films 3 are formed.

Further, prior to the plasma contact on the bonding films 3, the bonding films 3 may be subjected to a crosslinking treatment to crosslink the epoxy-modified silicone material constituting the bonding films 3. In this case, the chemical resistance (solvent resistance) of the bonding films 3 can be improved.

The bonding films 3 can be suitably used to bond the components of a product in which an organic solvent-containing composition is stored. An example of such products is an inkjet-type printing head (droplet discharge head; described later).

Examples of the crosslinking treatment include heat treatment and catalyst introducing treatment. These may be used in combinations of one or more.

### Droplet Discharge Head

The following describes an embodiment in which a bonded structure according to an embodiment of the invention is applied to an inkjet-type printing head.

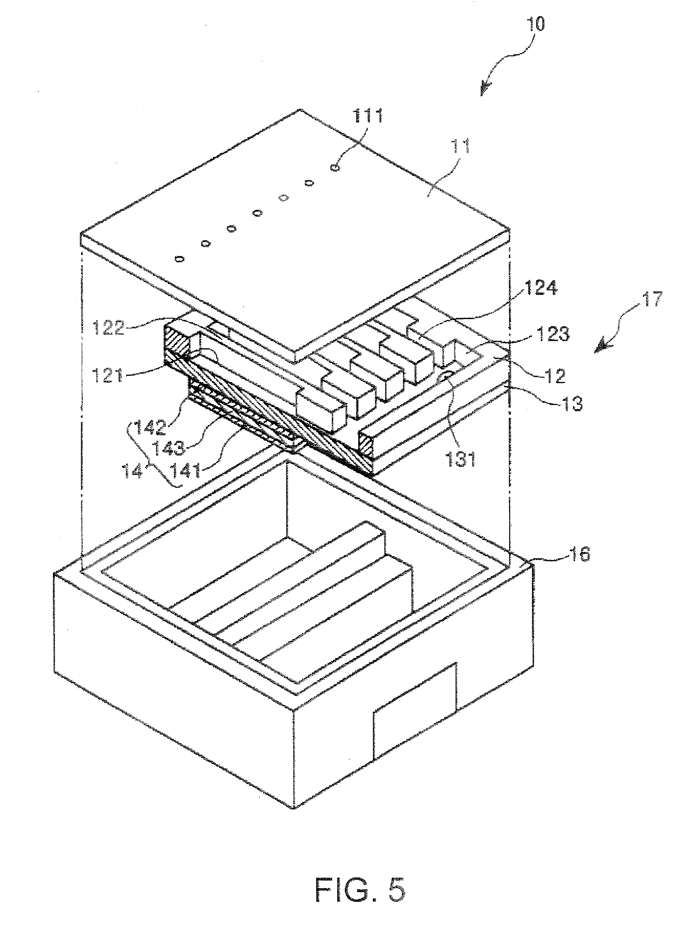

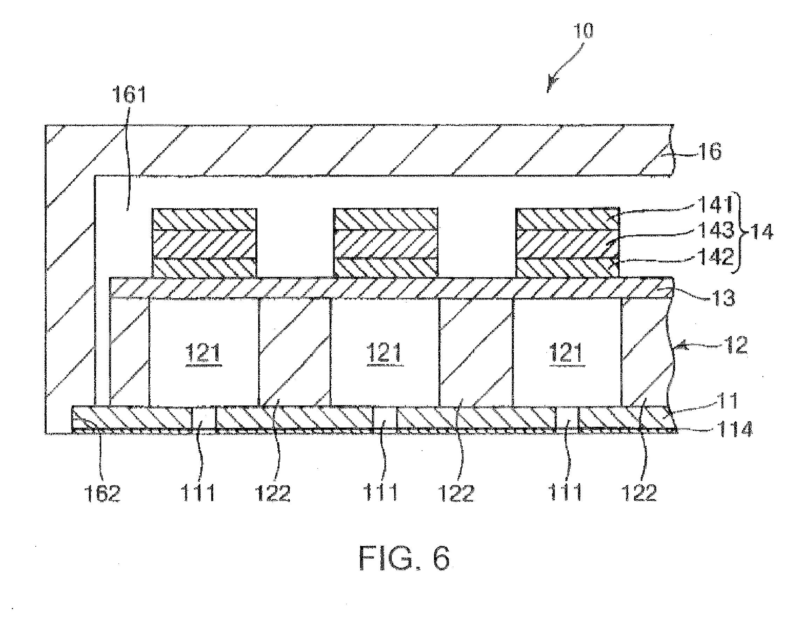

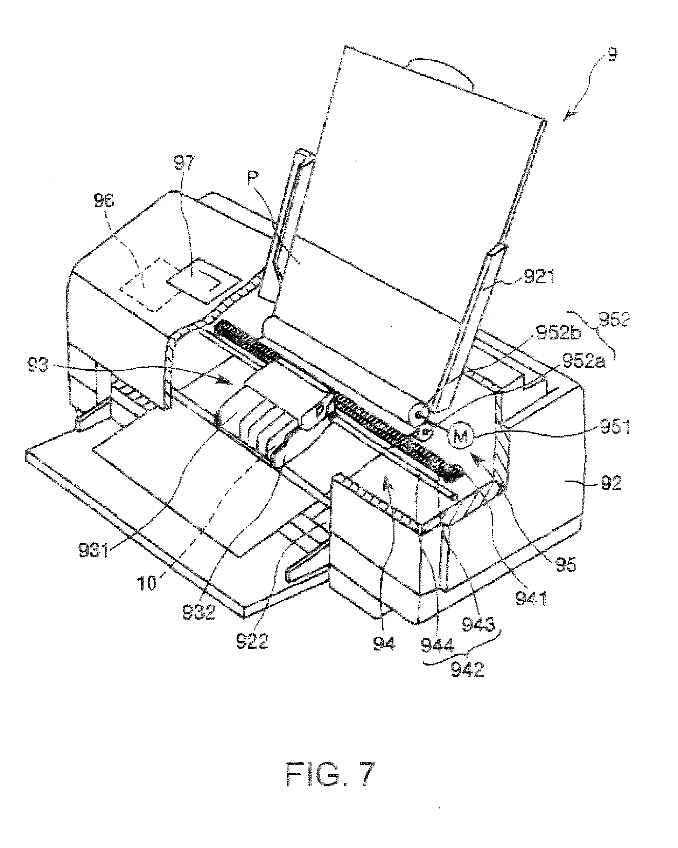

Fig. 5 is an exploded perspective view of an inkjet-type printing head (droplet discharge head) obtained by applying a bonded structure of an embodiment of the invention. Fig. 6 is a cross sectional view illustrating a relevant part of the inkjet-type printing head illustrated in Fig. 5. Fig. 7 is a schematic diagram representing an embodiment of an inkjet printer provided with the inkjet-type printing head illustrated in Fig. 5. Note that Fig. 5 is shown upside down from the state during normal use.

An inkjet-type printing head 10 illustrated in Fig. 5 is installed in an inkjet printer 9 as illustrated in Fig. 7.

The inkjet printer 9 illustrated in Fig. 7 includes an apparatus main body 92, which includes a tray 921 provided on the posterior upper part and on which a print paper P is placed, an ejection slot 922 provided on the anterior lower part and through which the print paper P is ejected, and a control panel 97 provided on the upper face.

The control panel 97 is realized by, for example, a liquid crystal display, an organic EL display, or an LED lamp, and includes a display section (not shown) that displays information such as an error message, and a control section (not shown) realized by various switches and the like.

The apparatus main body 92 mainly includes therein a printing unit (printing section) 94 provided with a head unit 93 capable of reciprocating movement, a paper feeder (paper feeding section) 95 that feeds the print paper P to the printing unit 94 one at a time, and a control unit (controller) 96 that controls the printing unit 94 and the paper feeder 95.

Under the control of the control unit 96, the paper feeder 95 intermittently feeds the print paper P, one at a time. The print paper P passes the region underneath the head unit 93. Here, the head unit 93 moves back and forth in directions substantially orthogonal to the feed direction of the print paper P to enable printing to the print paper P. Specifically, inkjet printing is performed by the reciprocating movement of the head unit 93 (main scan) and the intermittent feeding of the print paper P (sub scan).

The printing unit 94 includes the head unit 93, a carriage motor 941 that serves as the drive source of the head unit 93, and a reciprocating mechanism 942 that moves the head unit 93 back and forth in response to the rotation of the carriage motor 941.

The head unit 93 includes on the bottom an inkjet-type printing head 10 (hereinafter, simply "head 10") having large numbers of nozzle holes 111, an ink cartridge 931 that supplies ink to the head 10, and a carriage 932 in which the head 10 and the ink cartridge 931 are installed.

Note that the ink cartridge 931 affords full-color printing when it is loaded with inks of the four colors yellow, cyan, magenta, and black.

The reciprocating mechanism 942 includes a carriage guide shaft 944 supported by a frame (not shown) on the both ends, and a timing belt 943 extending parallel to the carriage guide shaft 944.

The carriage 932 is supported by the carriage guide shaft 944 to be freely movable back and forth, and is fixed to a portion of the timing belt 943.

When the timing belt 943 is driven in the forward and reverse directions via a pulley upon activation of the carriage motor 941, the head unit 93 moves back and forth by being guided by the carriage guide shaft 944. During this reciprocating movement, the head 10 appropriately discharges ink to perform printing on the print paper P.

The paper feeder 95 includes a paper feeding motor 951 provided as the drive source, and paper feeding rollers 952 that rotate upon activation of the paper feeding motor 951.

The paper feeding rollers 952 include a driven roller 952a and a drive roller 952b disposed face to face in the vertical direction on the both sides of the feed path (print paper P) of the print paper P. The drive roller 952b is linked to the paper feeding motor 951. With this construction, the paper feeding rollers 952 are able to feed large numbers of print papers P from the tray 921 to the printing unit 94, one at a time. Instead of the tray 921, a paper feeding cassette that stores the print paper P may be detachably provided.

The control unit 96 performs printing by controlling components such as the printing unit 94 and the paper feeder 95 based on the print data sent from a host computer such as a personal computer and a digital camera.

Though not illustrated, the control unit 96 mainly includes a memory that stores control programs used for the control of each component, a piezoelectric element drive circuit that drives piezoelectric elements (vibration source) 14 to control the discharge timing of ink, a drive circuit that drives the printing unit 94 (carriage motor 941), a drive circuit that drives the paper feeder 95 (paper feeding motor 951), a communication circuit that obtains print data from a host computer, and a CPU electrically connected to these components to control each component in a variety of ways.

The CPU is also electrically connected to various sensors operable to perform detections such as a remaining amount of ink in the ink cartridge 931, and the position of the head unit 93.

The control unit 96 obtains print data via the communication circuit, and stores it in the memory. The CPU processes the print data, and outputs drive signals to each drive circuit based on the processed data and the input data from the sensors. The drive signals then activate the piezoelectric elements 14, the printing unit 94, and the paper feeder 95 to perform printing on the print paper P.

The head 10 is described below with reference to Fig. 5 and Fig. 6.

The head 10 includes a head main body 17 and a housing 16 that houses the head main body 17. The head main body 17 includes a nozzle plate 11, an ink chamber substrate 12, a vibrating plate 13, and the piezoelectric elements (vibration source) 14 bonded to the vibrating plate 13. Note that the head 10 is an on-demand type piezo jet head.

The nozzle plate 11 is made from, for example, silicon-based materials such as SiO₂, SiN, and fused quartz, metal-based materials such as Al, Fe, Ni, Cu, and an alloy containing such metals, oxide-based materials such as alumina and iron oxide, or carbon-based materials such as carbon black and graphite.

The nozzle plate 11 includes large numbers of nozzle holes 111 through which an ink droplet is discharged. The pitch of the nozzle holes 111 is appropriately set according to print accuracy.

The ink chamber substrate 12 is fastened (fixed) to the nozzle plate 11.

The ink chamber substrate 12 has such a construction that the nozzle plate 11, side walls (barrier ribs) 122, and the vibrating plate 13 (described later) compartmentalize a plurality of ink chambers (cavities, pressure chambers) 121, a reservoir 123 that retains the ink supplied from the ink cartridge 931, and a supply opening 124 through which the ink is supplied to each ink chamber 121 from the reservoir 123.

The ink chambers 121 are arranged in the form of strips (rectangles), respectively corresponding to the nozzle holes 111. The volume in each ink chamber 121 is variable by the vibration of the vibrating plate 13 (described later), and the ink is discharged as a result of volume changes.

Examples of the base materials usable to obtain the ink chamber substrate 12 include silicon monocrystalline substrates, various glass substrates, and various resin substrates. Because these substrates are all common, the manufacturing cost of the head 10 can be reduced by using these substrates.

The vibrating plate 13 is bonded to the side of the ink chamber substrate 12 opposite from the nozzle plate 11, and a plurality of piezoelectric elements 14 is disposed on the side of the vibrating plate 13 opposite from the ink chamber substrate 12.

Further, a through hole 131 is formed through the vibrating plate 13 along the thickness direction at a predetermined position of the vibrating plate 13. The ink can be supplied from the ink cartridge 931 to the reservoir 123 through the through hole 131.

Each piezoelectric element 14 includes a piezoelectric layer 143 interposed between a lower electrode 142 and an upper electrode 141, and is disposed at a position corresponding to substantially the middle of each ink chamber 121. Each piezoelectric element 14 is electrically connected to the piezoelectric element drive circuit, and activated (vibrated, deformed) based on signals from the piezoelectric element drive circuit.

The piezoelectric elements 14 each serve as a vibration source to vibrate the vibrating plate 13 and thereby instantaneously increase the internal pressure of the ink chambers 121.

The housing 16 is made from materials such as various resin materials and various metal materials. The nozzle plate 11 is fixed and supported on the housing 16. Specifically, with the head main body 17 housed in a depression 161 of the housing 16, the peripheries of the nozzle plate 11 are supported on a step 162 formed along the peripheries of the depression 161.

A bonding method according to an embodiment of the invention can be used for at least one of the bonding between the nozzle plate 11 and the ink chamber substrate 12, between the ink chamber substrate 12 and the vibrating plate 13, and between the nozzle plate 11 and the housing 16.

In other words, a bonded structure according to an embodiment of the invention is used as at least one of the bonded structure of the nozzle plate 11 and the ink chamber substrate 12, the bonded structure of the ink chamber substrate 12 and the vibrating plate 13, and the bonded structure of the nozzle plate 11 and the housing 16.

Because the head 10 is bonded using the bonding film 3 interposed at the bonded interface, the bonded interface has a high bond strength and a high chemical resistance, making the head 10 durable and liquid-tight with respect to the ink stored in the ink chambers 121. Accordingly, the head 10 is highly reliable.

Further, because reliable bonds can be formed even at very low temperatures, a large-area head can be produced even from materials having different linear coefficients of expansion.

Further, the dimensional accuracy of the head 10 can be improved when a bonded structure according to an embodiment of the invention is used in part of the head 10. This enables accurate control of the discharge direction of the ink droplet from the head 10, or the separation distance between the head 10 and the print paper P, making it possible to improve the quality of the print result in the inkjet printer 9.

Further, because the liquid material can be supplied to any desired position using the droplet discharge method, the localized stress concentration that may occur at the bonded interface of each bonded structure can be relieved by appropriately controlling the bonding area or the bond position of the bonded structure. Thus, the bonding of each member is ensured even when the coefficient of thermal expansion is greatly different, for example, between the nozzle plate 11 and the ink chamber substrate 12, between the ink chamber substrate 12 and the vibrating plate 13, and between the nozzle plate 11 and the housing 16.

Further, by relieving the localized stress concentration at the bonded interface, it is ensured that defects such as detachment and deformation (warping) of the bonded structure are prevented. Therefore, the head 10 and the inkjet printer 9 produced this way are highly reliable.

In the head 10, the piezoelectric layer 143 is not deformed in the state where predetermined discharge signals are not input via the piezoelectric element drive circuit, or specifically in the state where voltage is not applied between the lower electrode 142 and the upper electrode 141 of the piezoelectric element 14. There accordingly will be no deformation in the vibrating plate 13, and there is no volume change in the ink chambers 121. That is, no ink droplet is discharged through the nozzle holes 111.

The piezoelectric layer 143 is deformed in the state where predetermined discharge signals are input via the piezoelectric element drive circuit, or specifically in the state where voltage is applied between the lower electrode 142 and the upper electrode 141 of the piezoelectric element 14. In response, the vibrating plate 13 undergoes a large deflection, and a volume change occurs in the ink chambers 121. This is accompanied by an instantaneous increase in the pressure inside the ink chambers 121, and an ink droplet is discharged through the nozzle holes 111.

After one discharge of ink, the piezoelectric element drive circuit stops applying voltage between the lower electrode 142 and the upper electrode 141. As a result, the piezoelectric element 14 almost returns to the original shape, and the volume in the ink chambers 121 increases. Here, the ink is acted upon by the pressure directed from the ink cartridge 931 to the nozzle holes 111 (positive pressure). Thus, entry of air into the ink chambers 121 through the nozzle holes 111 is prevented, and the ink is supplied from the ink cartridge 931 (reservoir 123) to the ink chambers 121 in an amount corresponding to the discharge amount.

In this manner, the head 10 can be used to print any (desired) characters or graphics by successively inputting discharge signals via the piezoelectric element drive circuit to the piezoelectric element 14 of the print position.

Note that the head 10 may include a thermoelectric converting element instead of the piezoelectric element 14. Specifically, the head 10 may be adapted to operate according to the bubble jet scheme (Bubble Jet^{®}) to discharge ink by the thermal expansion of material using the thermoelectric converting element.

Note that, in the head 10 of the structure described above, the nozzle plate 11 has a coating 114 formed to impart liquid repellency. This ensures that the ink droplet discharged through the nozzle holes 111 does not remain around the nozzle holes 111. As a result, the ink droplet discharged through the nozzle holes 111 can reliably land on the target region.

The invention has been described with respect to certain embodiments of bonding methods and bonded structures with reference to the attached drawings. It should be noted however that the invention is not limited to the foregoing descriptions.

For example, in a bonding method of the invention, one or more steps may be added for any purpose, as required.

Further, a bonded structure of the invention is to be construed as being also applicable to other fields, other than the droplet discharge head. Specifically, a bonded structure of the invention is applicable to, for example, lenses of optical devices, semiconductor devices, and microreactors.

### Examples

The following describes specific examples of the invention.

### Evaluation of Bonded Structure

### 1. Formation of Bonded Structure

### Example 1

First, a first base material (substrate) and a second base material (counter substrate) were prepared using a stainless steel (SUS430) substrate (length 100 mm × width 100 mm × average thickness 40 µm) and a polyphenylene sulfide (PPS) substrate (length 100 mm × width 100 mm × average thickness 4 µm), respectively.

Next, an epoxy-modified silicone material (Momentive Performance Materials Inc., Japan; TSR-194) was prepared, and this liquid material was supplied onto both the SUS and PPS substrates to form a liquid coating on each substrate using a spin coating method.

The epoxy-modified silicone material is one in which phthalic anhydride and linoleic acid are added as additives to a branched silicone material that is joined to a bisphenol-A epoxy resin of general formula (9) and has a unit structure of chemical formula (4) at the branched portion, a unit structure of at least one of chemical formulae (5) and (6) at the linking portion, and a unit structure of at least one of chemical formulae (7) and (8) at the terminal portion.

The liquid coatings were then dried and cured by heating at 200°C for 2 hours, so as to form a bonding film (average thickness: about 1 µm) on each of the SUS and PPS substrates.

Then, a plasma was brought into contact with the bonding film formed on the SUS and PPS substrates under the conditions below, using the atmospheric pressure plasma apparatus illustrated in Fig. 3. The bonding film was activated in this manner to develop adhesion to the bonding film surface.
Conditions of Plasma Treatment
Processing gas: Mixed gas of helium gas and oxygen gas
Gas supply rate: 10 SLM
Distance between electrodes: 1 mm
Applied voltage: 1 kVp-p
Voltage frequency: 40 MHz
Mobility rate: 1 mm/sec

Thereafter, the SUS substrate and the PPS substrate were mated to each other on the plasma contacted surfaces of the bonding films.

The SUS substrate and the PPS substrate were then maintained at ordinary temperature (about 25°C) for 1 min while applying a pressure of 50 MPa to improve the bond strength of the bonding films.

After these steps, a bonded structure was obtained in which the SUS substrate and the PPS substrate were bonded to each other via the bonding films.

### Example 2

A bonded structure was obtained as in Example 1 except that the resulting bonded structure was further heated at 200°C for 2 hours.

### Example 3

A bonded structure was obtained as in Example 1 except that the liquid coatings were dried and cured at ordinary temperature (around 25°C) for about 20 hours, instead of 200°C for 2 hours.

### Example 4

A bonded structure was obtained as in Example 1 except that the liquid coatings were dried and cured at ordinary temperature (around 25°C) for about 20 hours, instead of 200°C for 2 hours, and that the resulting bonded structure was further heated at 200°C for 2 hours.

### Example 5

A bonded structure was obtained as in Example 1 except that the bonding film was not formed on the PPS substrate.

### Example 6

A bonded structure was obtained as in Example 5 except that a polyimide (PI) substrate was used as the second base material, instead of the PPS substrate.

### Example 7

A bonded structure was obtained as in Example 5 except that a polyethylene terephthalate (PET) substrate was used as the second base material, instead of the PPS substrate.

### Comparative Examples 1 to 3

Bonded structures were obtained as in Example 1 except that the materials presented in Table 1 were used for the first base material and the second base material, and that an epoxy-based adhesive was used for the bonding of the base materials.

### Comparative Example 4

A first base material and a second base material were prepared using a SUS substrate and a PPS substrate, respectively, as in Example 1.

Then, a silicone material (Shin-Etsu Chemical Co., Ltd., "KR-251") not joined to epoxy resin was prepared, and this liquid material was supplied onto both the SUS and PPS substrates to form a liquid coating on each substrate, using a spin coating method.

The liquid coatings were then dried and cured by heating at 150°C for 2 hours, so as to form a bonding film (average thickness: about 4 µm) on each of the SUS and PPS substrates.

This was followed by ultraviolet ray irradiation of the bonding film under the following conditions. The bonding film was activated in this manner to develop adhesion to the bonding film surface.
Conditions of Ultraviolet Ray Irradiation
Composition of atmosphere gas: Nitrogen gas
Temperature of atmosphere gas: 20°C
Pressure of atmosphere gas: Atmospheric pressure (100 kPa)
Wavelength of ultraviolet ray: 172 nm
Irradiation time of ultraviolet ray: 5 min

Then, the SUS substrate and the PPS substrate were mated to each other on the adhesion-developed surfaces of the bonding films.

The silicon substrate and the glass substrate were then maintained at ordinary temperature (about 25°C) for 1 min while applying a pressure of 50 MPa. Then, the substrates were allowed to stand at ordinary temperature for 3 days to improve the bond strength of the bonding films.

After these steps, a bonded structure was obtained in which the SUS substrate and the PPS substrate were bonded to each other via the bonding films.

### Comparative Example 5

A bonded structure was obtained as in Comparative Example 4 except that the bonding film was not formed on the PPS substrate.

### 2. Evaluation of Bonded Structure

### 2.1 Evaluation of Bond Strength in Thickness Direction

The strength of each bonded structure obtained in Examples 1 to 7 and Comparative Examples 1 to 5 was measured along the thickness direction of the base materials, using a Romulus (Quad Group Inc.). The bond strength was evaluated according to the following criteria.

### Evaluation Criteria of Bond Strength in Thickness Direction

Excellent: 10 MPa (100 kgf/cm²) or more
Good: 5 MPa (50 kgf/cm²) or more, less than 10 MPa (100 kgf/cm²)
Acceptable: 1 MPa (10 kgf/cm²) or more, less than 5 MPa (50 kgf/cm²)
Poor: Less than 1 MPa (10 kgf/cm²)

### 2.2 Evaluation of Bond Strength in Plane Direction

The bond strength along the plane direction was evaluated as follows according to the peel strength test (specified in JIS-G3469) with respect to the bonded structures obtained Examples 1 to 7 and Comparative Examples 1 to 5.

Specifically, for each bonded structure obtained in Examples to 7 and Comparative Examples 1 to 5, a cut measuring 10 mm in width × 60 mm in length was made in the second base material down to the bonding film.

Then, the second base material cut in a size of 10 mm in width × 60 mm in length was stripped by peeling up the edge, and the load needed to peel it at a rate of 10 mm/min in a 90° direction at ordinary temperature was measured using a 90° peel tester (NX-500NE, Imada Co., Ltd.). Evaluation was made based on the measured load, using the following criteria.

### Evaluation Criteria of Bond Strength in Plane Direction

Excellent: 0.2 N/mm or more
Good: 0.1 N/mm or more, less than 0.2 N/mm
Acceptable: 0.05 N/mm or more, less than 0.1 N/mm
Poor: less than 0.05 N/mm

### 2.3 Evaluation of Dimensional Accuracy

The dimensional accuracy of each bonded structure obtained in the Examples and Comparative Examples was measured along the thickness direction.

Dimensional accuracy was measured by measuring thickness at each corner of the square bonded structure, and by calculating the difference between the maximum value and the minimum value of the thicknesses measured at these four locations. The difference was evaluated according to the following criteria.

### Evaluation Criteria of Dimensional Accuracy

Good: less than 10 µm
Poor: 10 µm or more

Table 1 shows the results of evaluations 2.1 to 2.3

**Table 1**

| | Manufacturing conditions of bonded structure | | | | | | Evaluation results | | |
|---|---|---|---|---|---|---|---|---|---|
| | Material of first base material | Bonding film | | Material of second base material | Heating conditions | | Bond strength | | Dimensional accuracy |
| | | Material of bonding film | Position of bonding film | | Before energy irradiation | After energy irradiation | Thickness direction | Plane direction | |
| Example 1 | SUS430 | TSR-194 | Both of first and second base materials | PPS | 200°C × 2 hr | - | Excellent | Excellent | Good |
| Example 2 | | | | | 200°C × 2 hr | 200°C × 2 hr | Excellent | Good | Good |
| Example 3 | | | | | 25°C × 20 hr | - | Excellent | Good | Good |
| Example 4 | | | | | 25°C × 20 hr | 200°C × 2 hr | Excellent | Excellent | Good |
| Example 5 | | | Only on first base material | PPS | 200°C × 2 hr | - | Excellent | Good | Good |
| Example 6 | | | | PI | | | Excellent | Good | Good |
| Example 7 | | | | PET | | | Excellent | Good | Good |
| Comparative Example 1 | | Epoxy-based adhesive | - | PPS | - | - | Acceptable | Acceptable | Poor |
| Comparative Example 2 | | | | PI | | | Acceptable | Acceptable | Poor |
| Comparative Example 3 | | | | PET | | | Acceptable | Acceptable | Poor |
| Comparative Example 4 | | KR-251 | Both of first and second base materials | PPS | 150°C × 2 hr | - | Good | Poor | Good |
| Comparative Example 5 | | | Only on first base material | PPS | | | Good | Poor | Good |

| | | | | | | | | | |
|---|---|---|---|---|---|---|---|---|---|
| * PPS: Polyphenylene sulfide PET: Polyethylene terephthalate PI: Polyimide | | | | | | | | | |

As is clear from Table 1, the bonded structures of the Examples including the bonding film formed from an epoxy-modified silicone material have superior properties both in the bond strength along the thickness and plane directions, and dimensional accuracy.

In contrast, the bond strengths along the thickness and plane directions were insufficient in the bonded structures of the Comparative Examples 1 to 3 including the bonding film formed from an epoxy-based adhesive. Further, dimensional accuracy was particularly poor.

The bonded structures of Comparative Examples 4 and 5 including the bonding film formed from a silicone material not joined to epoxy resin had good properties in the bond strength along the thickness direction and dimensional accuracy, but the bond strength along the plane direction was poor. Note that, in the evaluation of bond strength in the thickness and plane directions, the bonded structures of Comparative Examples 4 and 5 both showed peeling of the bonding film at the interface between the bonding films, or between the second base material and the bonding film. This demonstrates that the bonding film formed from a silicone material not joined to epoxy resin is inferior to the bonding film formed from an epoxy-modified silicone material joined to epoxy resin, in terms of the bond strength at the interface between the bonding films, or between the second base material and the bonding film.

## Claims

1. A bonding method comprising:
forming a liquid coating of an epoxy-modified silicone material-containing liquid material onto a first base material and/or a second base material;
drying and/or curing the liquid coating to obtain a bonding film on the first base material and/or the second base material;
imparting energy to the bonding film to obtain an activated bonding film; and
contacting the first base material and the second base material via the activated bonding film, so as to obtain a bonded structure in which the first base material and the second base material are bonded to each other via the bonding film.

2. The bonding method according to claim 1, wherein the epoxy-modified silicone material is obtained by an addition reaction between a silicone material and an epoxy resin.

3. The bonding method according to claim 2, wherein the silicone material comprises a main backbone of polydimethylsiloxane, and wherein the main backbone is branched.

4. The bonding method according to claim 3, wherein the silicone material is one in which at least one of the methyl groups of the polydimethylsiloxane is substituted with a phenyl group.

5. The bonding method according to claim 2, wherein the silicone material comprises a plurality of silanol groups.

6. The bonding method according to claim 2, wherein the epoxy resin comprises a phenylene group in its molecule.

7. The bonding method according to claim 2, wherein the epoxy resin has a straight-chain molecular structure.

8. The bonding method according to claim 1, wherein the energy is imparted to the bonding film by contacting the bonding film with a plasma.

9. The bonding method according to claim 8, wherein the plasma contact is performed under atmospheric pressure.

10. The bonding method according to claim 8, wherein the plasma contact is performed by supplying a plasma gas to the bonding film, wherein the plasma gas is produced by introducing a gas between opposing electrodes under applied voltage between the electrodes.

11. The bonding method according to claim 10, wherein the electrodes are separated from each other by a distance of 0.5 to 10 mm.

12. The bonding method according to claim 10, wherein the voltage applied between the electrodes is 1.0 to 3.0 kVp-p.

13. The bonding method according to claim 8, wherein the plasma is produced from a gas whose primary component is a helium gas.

14. The bonding method according to claim 10, wherein the plasma is produced from a gas whose primary component is a helium gas, and wherein the gas is supplied between the electrodes at a rate of 1 to 20 SLM.

15. The bonding method according to claim 13, wherein the helium gas content of the gas is 85 vol% or more.

16. A bonded structure produced by bonding the first base material and the second base material to each other via the bonding film using the bonding method of any preceding claim.
